Europäisches Patentamt

**European Patent Office**

Office européen des brevets

(19)

(11) Numéro de publication: **0 020 932**
**B1**

(12) **FASCICULE DE BREVET EUROPEEN**

(45) Date de publication du fascicule du brevet:
**17.09.86**

(51) Int. Cl.⁴: **G 06 F 3/14**, G 06 F 15/20

(21) Numéro de dépôt: **80102238.5**

(22) Date de dépôt: **25.04.80**

(54) **Système de traitement et d'affichage de texte.**

(30) Priorité: **08.06.79 US 46894**

(43) Date de publication de la demande:
**07.01.81 Bulletin 81/1**

(45) Mention de la délivrance du brevet:
**17.09.86 Bulletin 86/38**

(84) Etats contractants désignés:
**DE FR GB**

(56) Documents cités:
**FR - A - 2 131 614**
**FR - A - 2 331 841**
**FR - A - 2 333 319**
**FR - A - 2 409 558**
**US - A - 3 582 946**
**US - A - 4 074 254**

**IBM TECHNICAL DISCLOSURE BULLETIN, vol. 17, no. 3,
août 1974 NEW YORK (US) SCHOMBURG et al.: "Raster
display with Half-index", pages 682-683
"Encyclopedia of Computer Science", Ralston et al.,
1976, pages 1417 et 1418**

(73) Titulaire: **International Business Machines Corporation,
Old Orchard Road, Armonk, N.Y. 10504 (US)**

(72) Inventeur: **Bringol, Charles Ronald, 3903 Sidehill Path,
Austin Texas 78731 (US)**

(74) Mandataire: **Bonneau, Gérard, Compagnie IBM France
Département de Propriété Industrielle, F-06610 La
Gaude (FR)**

## Description

Domaine Technique

La présente invention concerne un système de traitement et d'affichage de texte et, plus particulièrement, un procédé de déplacement d'un bloc de caractères sur l'écran d'affichage d'un système de traitement et d'affichage de texte qui utilise un moyen d'emmagasinage séquentiel emmagasinant les représentations codées des caractères à afficher dans une suite d'emplacements d'emmagasinage correspondant à la séquence de balayage des emplacements de caractères à afficher sur le dispositif d'affichage.

Etat de la Technique Antérieure

De nos jours, la préparation de documents implique souvent la frappe et l'édition de plusieurs ébauches d'un document avant la mise en forme correcte et définitive du document final qui doit être facilement compréhensible et esthétique à l'œil. Les étapes de préparation de l'imprimé final d'un document impliquent souvent: (1) la frappe d'une ébauche grossière à partir de données brutes provenant d'une dictée ou de notes; (2) les suppressions, les insertions, la présentation et les corrections par un éditeur; (3) la refrappe en utilisant l'ébauche grossière éditée en tant que source d'information; (4) la ré-édition pour être sûr de la correction et de la présentation esthétique; (5) la refrappe suivant les besoins exigés par l'étape (4) et la ré-édition définitive pour être sûr que la copie finale est bien correcte.

Comme on peut le voir d'après ce qui précède, chaque fois que de l'information est frappée à la machine, elle doit être relue et éventuellement éditée pour être sûr qu'elle est correcte, et chaque fois qu'elle est éditée, elle doit être refrappée. Ce procédé est extrêmement long pour la secrétaire qui perd du temps à refrapper le document ainsi que pour l'éditeur qui perd du temps à ré-éditer le document.

Aussi, l'art antérieur propose-t-il et utilise-t-il plusieurs dispositifs qui diminuent le temps perdu pour la refrappe et la ré-édition des documents. Une approche traditionnelle de l'art antérieur consiste à enregistrer l'information frappée à la machine sur un support secondaire, par exemple un support magnétique, qui est sélectivement utilisé par la dactylographe qui, à l'aide de sa machine à écrire, imprime automatiquement en sortie l'information contenue dans la première ébauche avec toutes les modifications apportées à l'édition. Depuis quelques années, cette approche traditionnelle est remplacée par des systèmes de traitement de texte qui utilisent des affichages à tube cathodique (CRT), ou similaires, qui affichent l'information entrée dans le système de traitement de texte, par exemple par clavier. Les données d'entrée sont affichées et l'opératrice peut apporter des corrections aux données affichées. Ces corrections incluent, bien entendu, l'entrée de nouvelles données, la suppression de données existantes ou l'insertion de nouvelles données.

De nos jours, on peut utiliser des systèmes de traitement de texte autonomes qui contiennent les circuits électroniques de commande nécessaires pour effectuer l'édition des données sur le tube d'affichage CRT en utilisant le clavier. Ces systèmes d'édition de texte ont, en général, leur propre mémoire de grande capacité dans laquelle sont emmagasinés de façon appropriée les caractères à afficher. Une fois que le contenu des données affichées est supposé être correct, les données emmagasinées dans la mémoire de grande capacité sont transmises à un microprocesseur central qui alors commande l'impression de ces données sur une imprimante de sortie quelconque classique.

Ainsi le document US-A 4 074 254 décrit un système de traitement et d'affichage de texte comportant une mémoire matricielle pour emmagasiner des données numériques représentant les positions des caractères à afficher sur le tube d'affichage, un moyen de balayage des lignes de caractères sur le tube d'affichage, un moyen de lecture des emplacements de la mémoire matricielle et une mémoire séquentielle pour emmagasiner séquentiellement les représentations codées des caractères à afficher selon la même séquence que celle du balayage des emplacements de caractères sur le tube d'affichage par le moyen de balayage, un accès étant fait aux représentations codées des caractères dans la mémoire séquentielle chaque fois que le moyen de lecture lit un emplacement de la mémoire matricielle comportant un caractère.

Alors que les systèmes de traitement de texte actuellement disponibles traitent l'addition de lettres et de pages de livre qui, de façon classique, sont imprimées paragraphe par paragraphe, il apparaît souhaitable de disposer de systèmes perfectionnés pouvant traiter de façon efficace une page entière d'un texte mis sur plusieurs colonnes. Dans le même ordre d'idée, il apparaît souhaitable d'avoir des systèmes de traitement de texte qui puissent sélectivement désigner des parties ou des blocs de données affichées et qui puissent complètement modifier le format, ou présentation, de la partie sélectionnée des données alphanumériques affichées et décaler ces parties désignées sur une autre portion de la page, voire sur une autre page. En d'autres termes, le besoin se fait sentir d'avoir des systèmes qui puissent traiter des textes par colonne et/ou graphiques.

Il existe actuellement des systèmes de traitement et d'affichage de texte qui peuvent disposer des données en colonnes et ensuite apporter quelques modifications à la marge et à l'espacement de ces colonnes.

Comme le mentionne l'article «Text Editing Systems» dans Encyclopedia of Computer Science» de 1976, page 1418, il existe également des systèmes de traitement de texte dans lesquels il est possible de définir à l'aide de caractères spéciaux, le début et la fin d'une suite de caractères de façon à la supprimer ou la déplacer à l'aide du curseur.

Mais l'art antérieur n'offre aucun système de traitement et d'affichage de texte dans lequel une partie quelconque d'une page, ou d'un bloc, d'informations alphanumériques affichées peut être directement définie à un autre emplacement du texte avec les marges et positions requises.

Exposé de l'Invention

L'objet de la présente invention est un procédé permettant donc un système de traitement et d'affichage de texte de déplacer une section, ou un bloc quelconque de caractères de largeur variable affichés sur le tube d'affichage.

Le système de traitement et d'affichage de texte dans lequel l'invention est mise en œuvre comprend: un microprocesseur, un moyen d'emmagasinage matriciel pour emmagasiner des données numériques représentant les positions des caractères du texte à afficher sur le tube d'affichage, un moyen de balayage des lignes de caractères sur le tube d'affichage, un moyen de lecture des emplacements du moyen d'emmagasinage matriciel en synchronisation avec le moyen de balayage, un moyen d'emmagasinage séquentiel pour emmagasiner séquentiellement les représentations codées des caractères à afficher selon la même séquence que celle du balayage des emplacements de caractères sur le tube d'affichage par le moyen de balayage, un moyen d'accès aux représentations codées des caractères dans le moyen d'emmagasinage séquentiel chaque fois que le moyen de lecture lit un emplacement du moyen d'emmagasinage matriciel comportant un caractère, et un moyen de commande pour appliquer des signaux représentant le caractère à afficher audit moyen de balayage, en réponse à la représentation codée d'un caractère fournie par le moyen d'accès.

Les données numériques emmagasinées dans le moyen d'emmagasinage matriciel pour représenter les positions de caractères à afficher, sont formées de valeurs binaires correspondant chacune à une unité d'échappement sur le tube d'affichage, chaque caractère de largeur variable étant représenté par une suite de bits de même valeur dont le nombre est fonction de la largeur du caractère à afficher suivie d'un bit de la valeur opposée, l'absence de caractère à afficher étant représentée par une suite de bits de la valeur opposée.

Le procédé selon l'invention consiste à:
– placer le curseur à un emplacement du tube d'affichage définissant la position supérieure la plus à gauche du bloc devant être déplacé
– insérer par l'intermédiaire dudit microprocesseur, d'une part les données d'un premier caractère spécial initial dont la position est déterminée par le curseur sur le tube d'affichage définissant la position supérieure la plus à gauche dudit bloc, dans ledit moyen d'emmagasinage matriciel, et d'autre part la représentation codée dudit caractère spécial initial dans ledit moyen d'emmagasinage séquentiel à une position déterminée par son emplacement dans la séquence de balayage des caractères sur le tube d'affichage,

– placer le curseur à un emplacement du tube d'affichage définissant la position inférieure la plus à droite du bloc devant être déplacée,
– insérer par l'intermédiaire dudit microprocesseur, d'une part les données d'un second caractère spécial final dont la position est déterminée par le curseur sur le tube d'affichage définissant la position inférieure la plus à droite dudit bloc, dans ledit moyen d'emmagasinage matriciel, et d'autre part la représentation codée dudit caractère spécial final dans ledit moyen d'emmagasinage séquentiel à une position déterminée par son emplacement dans la séquence de balayage des caractères sur le tube d'affichage,
– placer le curseur à un emplacement du tube d'affichage définissant la position supérieure la plus à gauche du bloc à son nouvel emplacement,
– insérer par l'intermédiaire dudit microprocesseur, d'une part les données d'un second caractère spécial initial dont la position est déterminée par le curseur sur le tube d'affichage définissant la position supérieure la plus à gauche du bloc à son nouvel emplacement, dans ledit moyen d'emmagasinage matriciel, et d'autre part la représentation codée dudit caractère spécial initial dans ledit moyen d'emmagasinage séquentiel à une position déterminée par son emplacement dans la séquence de balayage des caractères sur le tube d'affichage,
– placer le curseur à un emplacement du tube d'affichage définissant la position inférieure la plus à droite du bloc à son nouvel emplacement,
– insérer par l'intermédiaire dudit microprocesseur, d'une part les données d'un second caractère spécial final dont la position est déterminée par le curseur sur le tube d'affichage définissant la position inférieure la plus à droite du bloc à son nouvel emplacement, dans ledit moyen d'emmagasinage matriciel, et d'autre part la représentation codée dudit caractère spécial final dans ledit moyen d'emmagasinage séquentiel à une position déterminée par son emplacement dans la séquence de balayage des caractères sur le tube d'affichage, et
– entrer des commandes qui, par l'intermédiaire du microprocesseur, suppriment les représentations codées des caractères du bloc aux positions qu'elles occupaient dans ledit moyen d'emmagasinage séquentiel et les insèrent aux positions occupées par lesdits caractères dans la séquence de balayage des caractères à afficher, lesdites commandes provoquant le déplacement simultané des données représentant lesdits caractères de leur position actuelle à la position désirée dans ledit moyen d'emmagasinage matriciel.

Il est à noter qu'un système de traitement et d'affichage de texte du type comportant une mémoire matricielle emmagasinant les données représentant les positions des caractères du texte à afficher sur le tube et une mémoire séquentielle emmagasinant les représentations codées des caractères à afficher, dans lequel les données représentant chaque caractère de largeur variable sont formées d'une suite de bits dont le nombre est fonction de la largeur du caractère, est revendiqué dans la demande de brevet européen EP-A 020 927 qui bénéficie de la même date de priorité que la présente demande.

Brève Description des Figures

La figure 1 représente de façon simplifiée un exemple d'information alphanumérique affichée sur un tube cathodique.

La figure 2 représente schématiquement un moyen d'emmagasinage matriciel associé au tube cathodique CRT pour emmagasiner les données correspondant à la position des caractères alphanumériques affichés sur le tube de la figure 1.

La figure 3 représente schématiquement un moyen d'emmagasinage séquentiel, associé au moyen d'emmagasinage matriciel pour emmagasiner les représentations codées des caractères affichés séquentiellement.

La figure 4 représente schématiquement un moyen d'emmagasinage auquel on a accès de façon séquentielle pour l'emmagasinage des représentations codées des caractères affichés dans une séquence de positions d'emmagasinage correspondant spatialement à la position des caractères affichés.

La figure 5 représente schématiquement des caractères alphanumériques disposés en colonnes sur un tube d'affichage CRT.

La figure 6 représente schématiquement un moyen d'emmagasinage matriciel associé au tube cathodique CRT pour emmagasiner les données relatives aux positions des caractères alphanumériques affichés de la figure 5.

La figure 7 représente schématiquement un moyen d'emmagasinage à accès séquentiel associé au moyen d'emmagasinage matriciel de la figure 6.

Les figures 8 à 11 sont les représentations schématiques correspondant respectivement aux figures 1 et 4, dans lesquelles les attributs aux caractères codés sont également emmagasinés dans les moyens d'emmagasinage à accès séquentiel.

Les figures 12 à 14 sont des représentations schématiques correspondant respectivement aux figures 1 à 3 mais dans lesquelles l'affichage alphanumérique de la figure 1 est proportionnellement espacé selon l'invention et, par voie de conséquence, le fonctionnement du moyen d'emmagasinage matriciel de la figure 13 est basé sur un changement de code plutôt que sur la position des caractères.

La figure 15 représente schématiquement l'information alphanumérique sur un tube d'affichage CRT durant une étape initiale d'un procédé de déplacement d'un bloc de caractères.

La figure 16 représente un schéma d'un moyen d'emmagasinage matriciel associé au tube cathodique CRT pour emmagasiner les données de position des caractères alphanumériques de la figure 15.

La figure 17 représente un schéma d'un moyen d'emmagasinage à accès séquentiel associé au moyen d'emmagasinage matriciel de la figure 16 pour emmagasiner les représentations codées des caractères affichés en séquence durant l'étape initiale.

La figure 18 représente schématiquement un moyen d'emmagasinage séquentiel pour l'emmagasinage des représentations codées et des positions des caractères affichés sur la figure 15.

La figure 19 représente un schéma des caractères alphanumériques affichés sur le tube cathodique CRT durant une seconde étape d'un procédé de déplacement d'un bloc de caractères.

La figure 20 représente un schéma d'un moyen d'emmagasinage matriciel associés au tube cathodique CRT pour emmagasiner les données de position correspondant aux positions des caractères alphanumériques affichés de la figure 19.

La figure 21 représente un schéma d'un moyen d'emmagasinage à accès séquentiel associé au moyen d'emmagasinage matriciel de la figure 20 pour emmagasiner les représentations codées des caractères affichés en séquence à cette seconde étape.

La figure 22 représente schématiquement un moyen d'emmagasinage séquentiel pour l'emmagasinage des représentations codées et des positions des caractères affichés sur la figure 19.

La figure 23 est une représentation schématique de l'information alphanumérique sur le tube d'affichage CRT durant une troisième étape d'un procédé de déplacement d'un bloc de caractères.

La figure 24 représente schématiquement un moyen d'emmagasinage matriciel associé au tube CRT pour emmagasiner les données correspondant aux caractères alphanumériques affichés de la figure 23.

La figure 25 représente schématiquement un moyen d'emmagasinage à accès séquentiel associé au moyen d'emmagasinage matriciel de la figure 24 pour emmagasiner les représentations codées des caractères affichés à cette troisième étape.

La figure 26 représente schématiquement un moyen d'emmagasinage séquentiel pour l'emmagasinage des représentations codées et des positions des caractères affichés de la figure 23.

La figure 27 représente schématiquement les informations alphanumériques affichées sur le tube CRT durant une quatrième étape d'un procédé de déplacement d'un bloc de caractères.

La figure 28 représente schématiquement un moyen d'emmagasinage matriciel associé au tube cathodique CRT pour emmagasiner les données correspondant aux positions des caractères alphanumériques de la figure 27.

La figure 29 représente schématiquement un moyen d'emmagasinage à accès séquentiel associé au moyen d'emmagasinage matriciel de la figure 28 pour emmagasiner les représentations codées des caractères affichés en séquence à cette quatrième étape.

La figure 30 représente schématiquement un moyen d'emmagasinage séquentiel utilisé pour l'emmagasinage des représentations codées et des positions des caractères affichés de la figure 27.

La figure 31 représente schématiquement les lignes de balayage du faisceau électronique lorsqu'il parcourt un tube cathodique CRT tel qui peut être utilisé pour la présente invention.

La figure 32 est une vue agrandie d'une région de position de caractère, pour montrer la réalisation pratique du microbalayage lors de l'affichage de caractères.

Les figures 33 et 34 sont des schémas montrant la logique de commande de l'affichage où l'information relative aux positions des caractères et l'information relative aux représentations codées pour engendrer les caractères sont respectivement emmagasinées dans deux dispositifs d'emmagasinage distincts.

Les figures 35 et 36 sont des schémas montrant la logique de commande d'un affichage où l'information relative aux positions des caractères est emmagasinée dans une seule mémoire à accès séquentiel.

Mode de réalisation préféré de l'invention

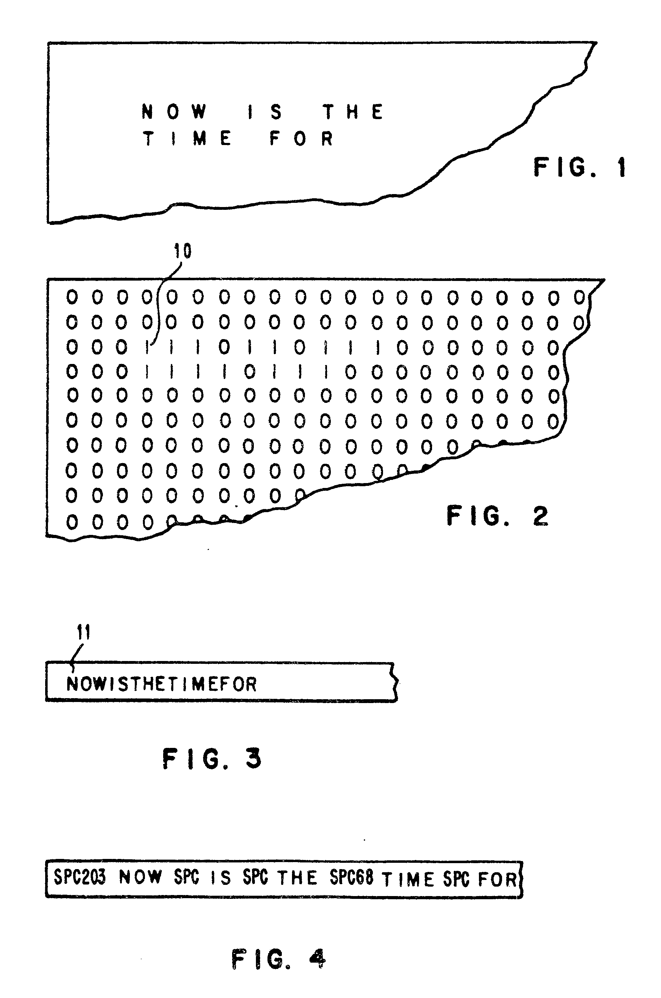

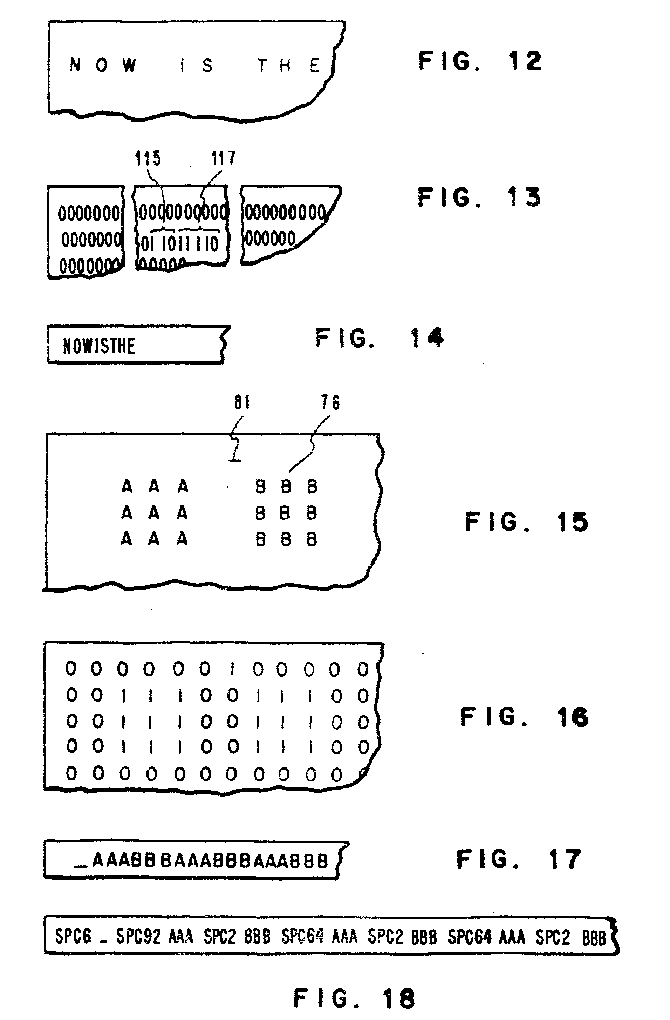

Les figures 1 à 11 représentant un système d'affichage de caractères de largeur fixe utilisant des moyens d'emmagasinage matriciel et séquentiel ou seulement séquentiel. Les figures 12 à 14 illustrent l'emmagasinage de caractères à espacement proportionel tel qu'utilisé selon l'invention revendiquée. Les figures 15 à 36 bien que n'ayant par pour objet un mode de réalisation de l'invention représentent un procédé de déplacement d'un bloc de caractères de texte de largeur fixe et des systèmes d'affichage de caractère, et sont utilisées dans le but de mieux expliquer l'invention telle qu'elle est revendiquée.

Tout d'abord un système de traitement de texte est décrit dans lequel la mémoire comporte un moyen d'emmagasinage à accès séquentiel pour emmagasiner des représentations codées d'un bloc ou d'une page de caractères alphanumériques affichés sur un tube cathodique CRT. Dans le moyen d'emmagasinage à accès séquentiel, les représentations codées des caractères affichés doivent se trouver dans une séquence de positions d'emmagasinage correspondant spatialement aux positions des caractères du bloc, ou de la page, alors affiché.

Une illustration d'une mémoire à accès séquentiel est décrite en référence aux figures 1 et 4.

La figure 1 représente une portion d'un tube cathodique CRT sur lequel est affiché un morceau de page portant des données alphanumériques. La figure 4 représente une organisation de mémoire généralisée fournissant un moyen d'emmagasinage à accès séquentiel afin d'emmagasiner la représentation codée des caractères affichés sur le tube CRT de la figure 1 dans une suite de positions d'emmagasinage correspondant spatialement aux positions des caractères du bloc affiché sur le tube CRT de la figure 1. A des fins d'illustration, on suppose que le caractère «N» sur le tube CRT de la figure 1 se trouve dans la quatrième position de la troisième rangée et que chaque rangée de l'affichage a 100 positions de caractères. Dans ce cas, la désignation «spc (203)» dans le moyen d'emmagasinage à accès séquentiel de la figure 4 indique qu'il faut procéder à 203 espacements, c'est-à-dire qu'il y aura un déplacement sur deux lignes de 100 espacements chacune plus trois espacements, point auquel la représentation codée du caractère «N» est mise en séquence. Cette représentation, en utilisant le système qui sera décrit de façon détaillée dans la suite, permet d'appliquer au dispositif d'affichage des signaux représentant le caractère «N» en synchronisation avec les moyens de balayage du tube CRT pour atteindre la position du caractère «N» sur ce tube, ce qui a pour effet de rafraîchir le caractère «N». Cette opération est suivie d'un accès aux représentations codées des caractères respectifs «O» et «W», figure 4, et du rafraîchissement de ces caractères en synchronisation avec le balayage du tube CRT.

Conformément à un autre système d'affichage l'organisation de la mémoire illustrée sur les figures 2 et 3 fournissant le moyen d'emmagasinage à accès séquentiel pour emmagasiner les représentations codées des caractères affichés, est divisée en deux unités de mémoire qui fonctionnent en même temps. Une des unités de mémoire est un moyen d'emmagasinage matriciel qui emmagasine les données représentant uniquement la position des caractères affichés, comme le montre la figure 2 sur laquelle la position des bits «1» (élément d'information binaire) correspond spatialement à la position des caractères alphanumériques respectifs alors affichés sur le tube CRT de la figure 1. Durant le fonctionnement, comme cela sera décrit de façon plus détaillée dans la suite, il y a accès à la mémoire matricielle de la figure 2 en synchronisation avec un balayage répété du tube CRT afin de rafraîchir le caractère affiché. Par exemple, lorsque le tube cathodique CRT atteint le caractère «N», il y a accès au bit 10 dans la mémoire matricielle de la figure 2; accès qui, à son tour, provoque l'accès à la représentation codée 11 du caractère «N» dans la deuxième unité de mémoire représentée sur la figure 3 où les représentations codées des caractères affichés sont emmagasinées suivant la même séquence que celle des emplacements d'emmagasinage de position de la figure 2 et, en conséquence, suivant la même séquence que celle dans laquelle sont balayés les caractères sur le dispositif d'affichage de la figure 1. Bien entendu, dans la mémoire à accès séquentiel de la figure 3, aucune information de position n'est donnée, puisque cette dernière n'est donnée que par l'unité de mémoire de position de la figure 2 qui fonctionne avec le moyen d'emmagasinage représenté sur la figure 3, comme cela sera décrit dans la suite.

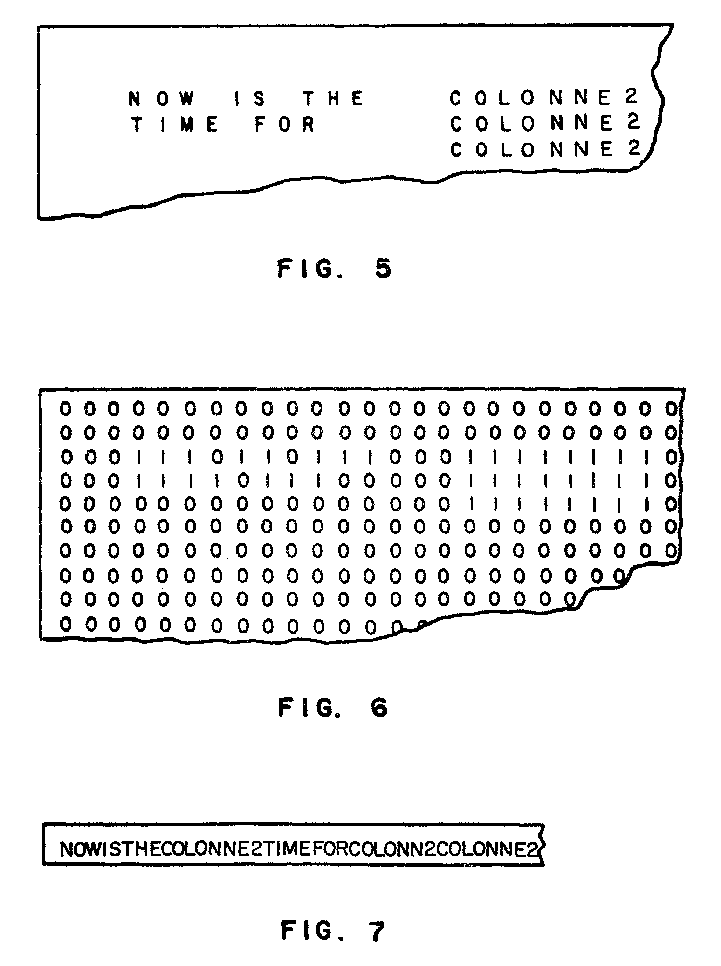

La correspondance spatiale des représentations codées des caractères alphanumériques de la mémoire avec les caractères alphanumériques véritables affichés sur le tube CRT, est représentée sur les figures 5, 6 et 7 dans le cas où l'information alphanumérique affichée est agencée par colonne. L'information de position emmagasinée dans la mémoire matricielle représentée sur la figure 6 correspond directement à l'agencement en colonnes des données alphanumériques de la figure 5. En conséquence, les bits de position «1» sont extraits de la mémoire matricielle, figure 6, en synchronisation avec le balayage du tube d'affichage CRT de la figure 5. Il y a donc accès dans la mémoire à accès séquentiel de la figure 7 aux représentations codées des caractères alphanumériques affichés, cet accès se faisant ligne par ligne en parcourant toute la ligne au lieu de se faire colonne par colonne.

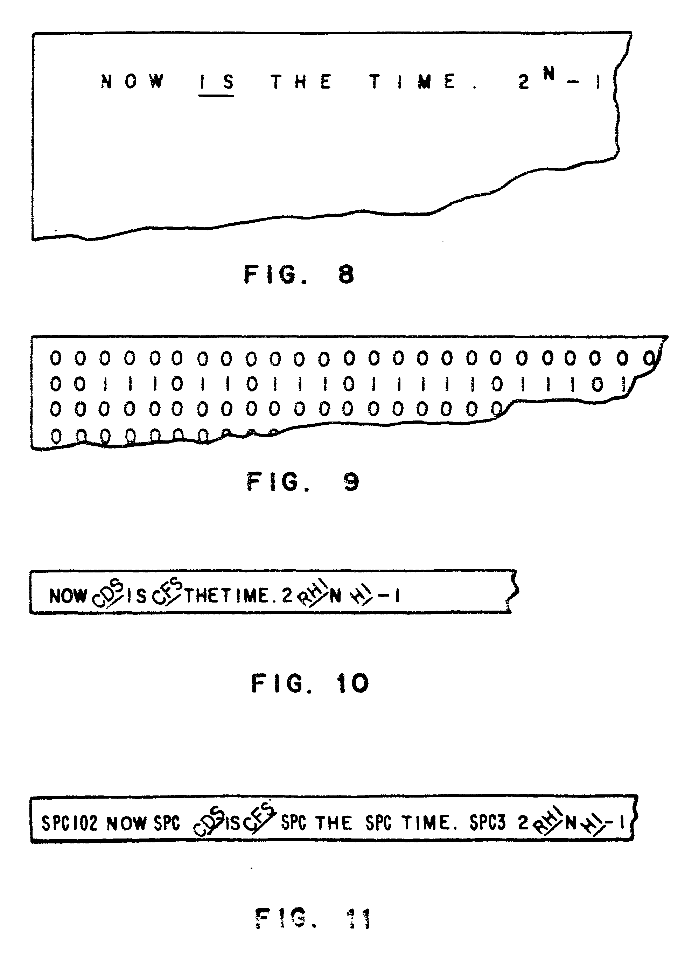

Les figures 8 à 11 montrent la façon suivant laquelle sont traités les attributs de caractère tel que le soulignement d'un caractère ou le décalage d'un caractère vers le haut ou vers le bas par rapport à la ligne de caractère. Dans le tube cathodique CRT de la figure 8, les données alphanumériques affichées montrent que les deux lettres «is» sont soulignées et que le chiffre «2» est élevé à la puissance «N». Lorsqu'il y a combinaison de l'unité de mémoire matricielle de position, figure 9, et du moyen d'emmagasinage à accès séquentiel pour les représentations codées des caractères, figure 10, l'information concernant les attributs de caractère est emmagasinée uniquement en association avec les données codées auxquelles il y a accès séquentiel, figure 10. Par exemple, pour souligner les deux lettres «is», un code de début de soulignement (CDS) est emmagasiné avant les deux lettres «is» et un code de fin de soulignement (CFS) est emmagasiné après les deux lettres «is». Pour le «N» décalé vers le haut, le code de demi-interlignage inversé (RHI) est utilisé avant «N» et un code de demi-interlignage (HI) est utilisé après le «N» pour repasser sur la ligne de caractère. La figure 11 montre une organisation selon laquelle l'information de position des caractères ainsi que les représentations codées des caractères sont emmagasinées dans une unité de mémoire à accès séquentiel, les données codées représentant les divers attributs de caractère, tels que les codes CDS, CFS, RHI, ou HI, sont emmagasinés similairement en étant associés aux représentations codées des caractères alors affichés.

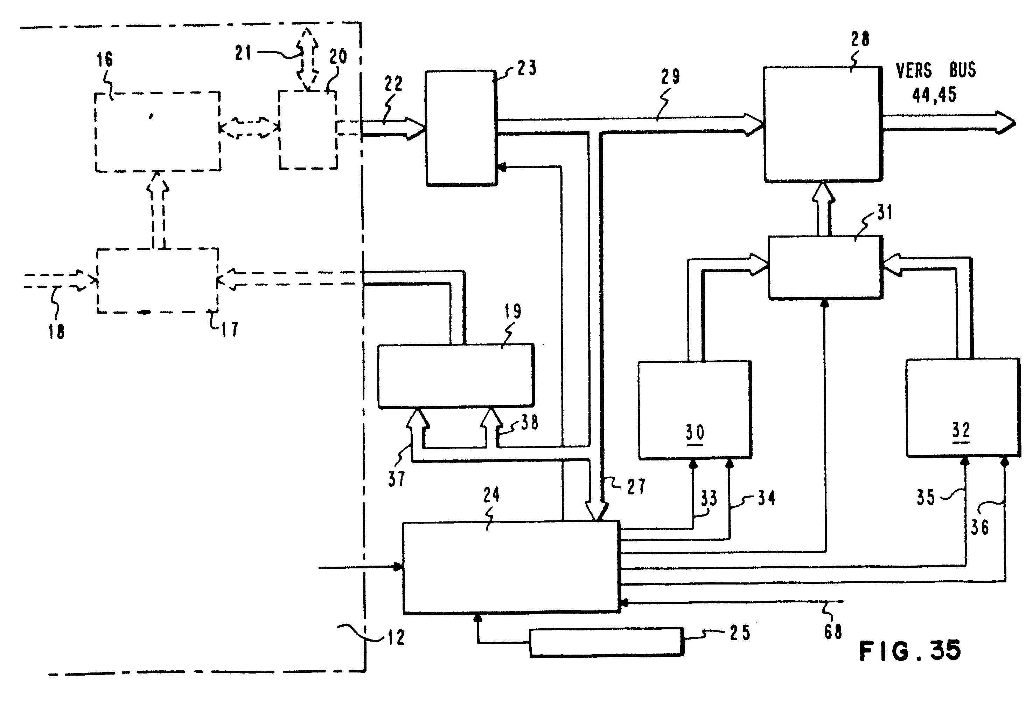

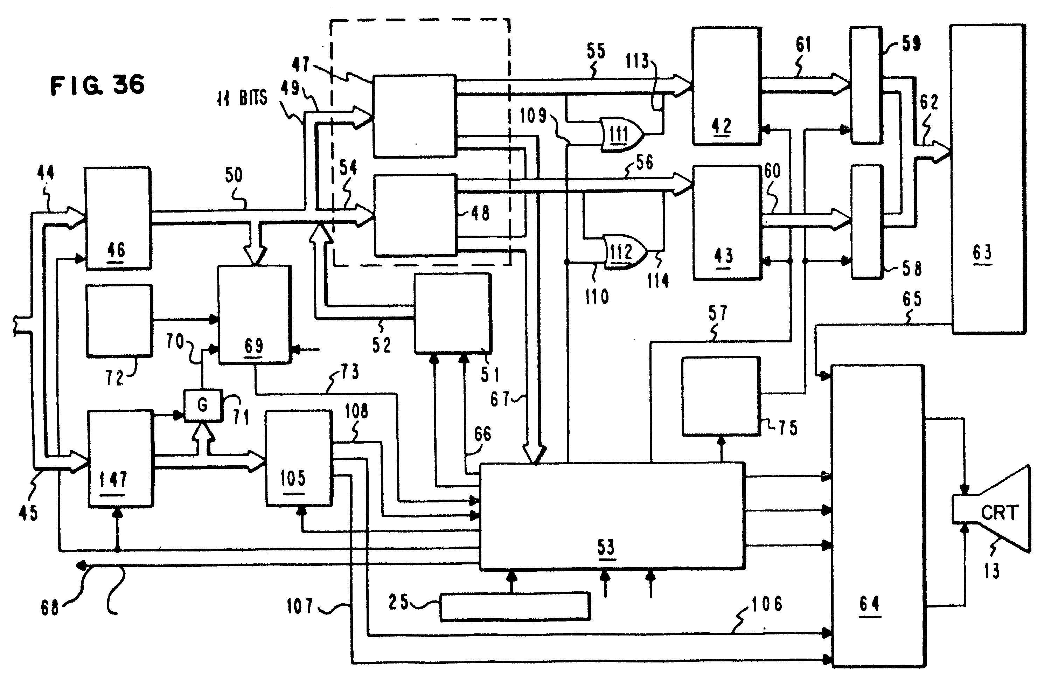

La logique de commande fondamentale d'un système d'affichage fonctionnant de manière à appliquer sur le tube CRT des signaux qui représentent tout le caractère à afficher, et son rafraîchissement à une position d'affichage particulière avant le déplacement du moyen de balayage sur la position d'affichage suivante est représentée sur les figures 35 et 36.

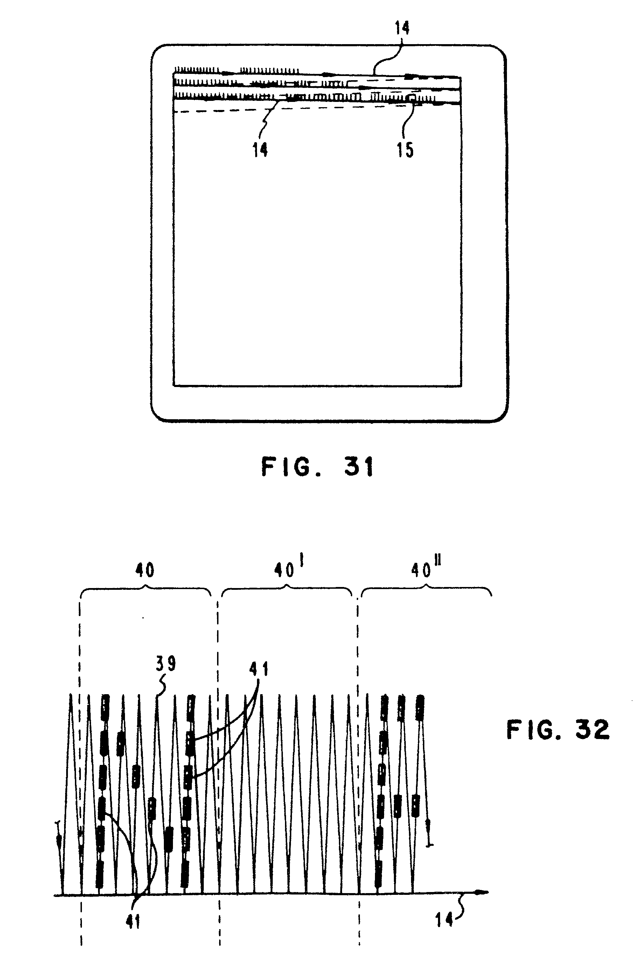

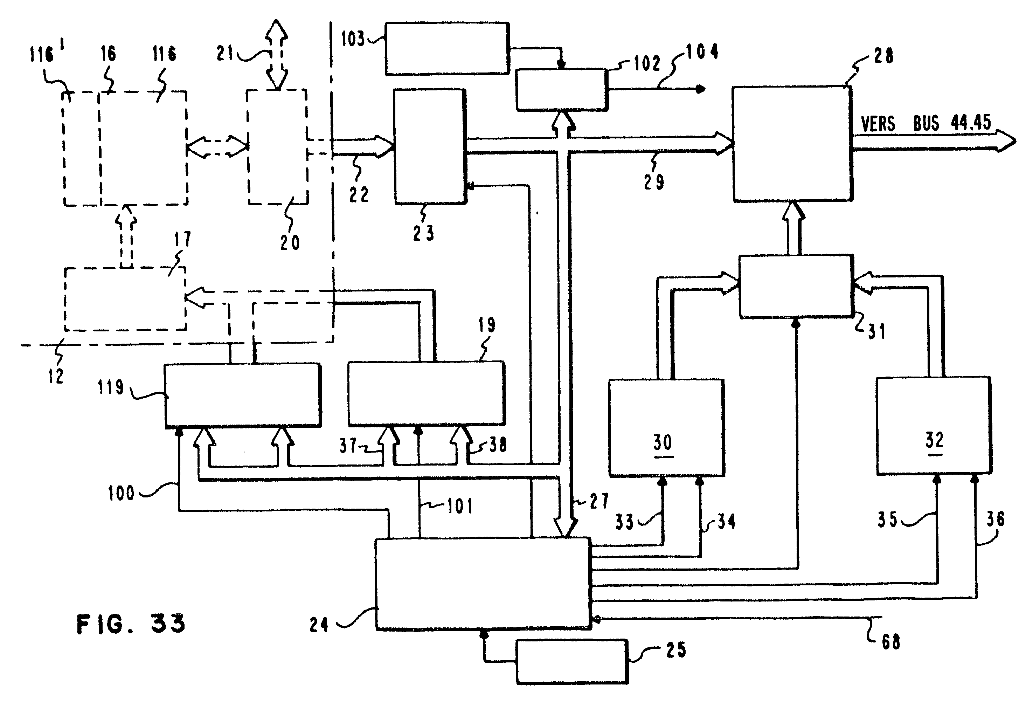

Le système est commandé par un microprocesseur classique 12 qui fournit les données requises qui vont être décrites dans la suite. Les signaux de commande de la déflexion principale du faisceau du tube CRT 13 commandent les bobines de déflexion d'axes X et Y du tube CRT. La logique représentée sur les figures 35 et 36 permet au faisceau électronique de balayage du tube CRT de se déplacer de la gauche vers la droite, comme le montre schématiquement la figure 31. Sur la figure 31, chaque ligne 14 du trajet de déflexion principale correspond à une ligne contenant plusieurs positions de caractères et formant une partie de toute une page affichée. En outre, comme cela sera décrit dans la suite, des signaux dont la fréquence est plus élevée, sont appliqués à un moyen de micro-déflexion de manière à engendrer une micro-trame, ou sous-trame, sous la commande des signaux fournis par la logique des figures 35 et 36. Ce balayage par micro-trame qui fournit le caractère particulier est représenté sur la figure 32 et produit le caractère affiché «N». Le caractère «N» est produit par le signal vidéo qui est commandé à partir d'un générateur de caractères qui fonctionne en synchronisation avec la micro-trame pour produire le caractère. En d'autres termes, lorsque la ligne 14 qui correspond au trajet de déflexion principale atteint une position de caractère 15, un caractère tel que celui représenté sur la figure 32, est complètement engendré avant que le balayage de la ligne de déflexion principale 14 ne passe à la position de caractère suivante.

En référence aux figures 35 et 36, les données alphanumériques à afficher sur le tube cathodique CRT 13 sont emmagasinées dans une mémoire à accès sélectif (RAM) 16 dans le microprocesseur 12 qui commande le système de traitement de texte. La mémoire RAM 16 contient les représentations codées des données d'un bloc, ou page, de caractères alphanumériques à afficher sur le tube CRT 13 suivant une séquence de positions d'emmagasinage correspondant spatialement aux positions des caractères de la page ou du bloc à afficher sur le tube CRT. La mémoire RAM 16 contient également des codes de commande qui déterminent la position des caractères ainsi que les caractéristiques des caractères affichés, par exemple, un soulignement de caractère. Durant la déflexion principale le long d'une ligne 14, lors du balayage du tube CRT représenté sur la figure 31, le sélecteur d'adresses 17, figure 35, demande au compteur d'adresses 19 un signal qui indique la position du faisceau de balayage le long de la ligne de déflexion principale 14, figure 31. Le compteur d'adresses 19, sous la commande de la logique de commande d'entrée 24, commande les séquences des données de caractères provenant de la mémoire RAM 16 de façon qu'une séquence de données de caractère soit envoyée au générateur de caractères, qui sera décrit dans la suite, suivant une séquence correspondant spatialement à l'affichage du tube CRT 13. Le but du sélecteur d'adresses 17, figure 35 est de multiplexer les signaux de position provenant du compteur d'adresses 19 avec toutes les autres adresses alors envoyées à la mémoire RAM 16 le long du bus 18 du microprocesseur ou avec d'autres fonctions indépendantes du microprocesseur. Le moyen de sélection de données 20 remplit une fonction de multiplexage similaire en ce qui concerne les données extraites de la mémoire RAM du microprocesseur, c'est-à-dire, les données relatives à d'autres fonctions indépendantes du microprocesseur. Les données sont envoyées par le bus de données 21 tandis que le bit de données qui indique le caractère à afficher à la position indiquée par le compteur 19 sur le tube CRT 13, est envoyé le long du bus 22 au registre d'entrée 23 tandis que le compteur d'adresses 19 est incrémenté de «un». La logique de commande d'entrée 24 qui fonctionne sous la commande d'une horloge à haute fréquence (60 nanosecondes) 25 examine le multiplet de données du registre 23, par l'entremise du bus 27, pour déterminer si le multiplet est un code d'instruction, un code de commande ou un code de caractère. Par exemple, un code d'instruction pourrait être le suivant: «CHARGER LES DEUX MULTIPLETS SUIVANTS DANS LE COMPTEUR D'ADRESSES 19». Dans ce cas, la logique de commande 24 transmet les deux multiplets suivants dans le compteur 19, par les bus 37 et 38. En revanche, s'il est déterminé que le multiplet dans le registre 23 est un code de commande, ce multiplet passe, par l'entremise du bus 29, à la mémoire-tampon RAM 28. Par définition, un code de caractère suit un code de commande. Ainsi, chaque fois qu'un multiplet de code de commande est détecté et chargé dans la mémoire-tampon 28, le multiplet suivant qui doit être un multiplet de code de caractère est extrait de la mémoire RAM et est chargé dans la mémoire-tampon 28 qui peut emmagasiner huit multiplets de codes de commande et huit multiplets de codes de caractère.

La mémoire-tampon RAM 3 à seize multiplets 28 est d'un usage particulièrement intéressant dans les systèmes d'affichage où l'espacement attribué au caractère est variable, suivant la largeur du caractère. Par exemple, le «W» peut occuper un espacement qui est presque deux fois l'espacement occupé par un «I». Ainsi, est-il concevable, pour un balayage particulier sur toute une ligne du tube CRT, qu'une ligne ayant de nombreux caractères étroits puisse contenir un nombre de caractères dépassant jusqu'à 20% le nombre de caractères que peut contenir une ligne ayant de plus larges caractères. Étant donné que le balayage du tube cathodique CRT est constant, c'est-à-dire, le temps qu'il faut à la déflexion principale pour parcourir une ligne 14 est constant, il s'ensuit que, dans une ligne ayant jusqu'à 20% de caractères supplémentaires, le traitement des données de cette ligne, pour un temps donné, est beaucoup plus important que le traitement d'une ligne ayant moins de caractères. La mémoire-tampon à seize multiplets 28 sert pour l'emmagasinage des codes de commande et de caractères qui peuvent ensuite être envoyés aux moyens générateurs de caractères du système de la présente invention en synchronisation avec la déflexion principale sur la ligne de balayage 14 de la figure 31.

La mémoire-tampon 28 fonctionne sous la commande du compteur 30 qui sert de pointeur d'entrée aux positions de la mémoire 28, par la porte 31, et du compteur 32 qui sert de pointeur de sortie aux positions de la mémoire-tampon 28, par la porte 31. Les compteurs d'entrée et de sortie 30 et 32 sont commandés par la logique de commande 24, d'une part par les lignes d'horloge 33 et d'effacement 34 en direction du compteur 30, et d'autre part par les lignes d'horloge 35 et d'effacement 36 en direction du compteur 32.

Lorsque la mémoire-tampon est chargée, l'appareil se trouve à l'étape à partir de laquelle le caractère alphanumérique à afficher sur une ligne d'affichage donnée peut être rafraîchi en synchronisation avec le moyen de balayage du tube CRT. Avant de passer à la description sur la façon dont les caractères sont engendrés en synchronisation avec le balayage du tube CRT, le cycle de balayage du tube CRT va être brièvement décrit en référence aux figures 31 et 32. Le signal vidéo est commandé par le générateur de caractères en synchronisation avec un balayage qui implique un balayage horizontal de déflexion principale le long des lignes 14 de la figure 31 ainsi qu'un balayage vertical par micro-trame, comme le montre la figure 32. En d'autres termes, lorsque le faisceau parcourt horizontalement la ligne 14, il est soumis à une sous-trame verticale le long de la ligne 39, comme le montre en détail la figure 32. A des fins d'illustration, on va considérer que les caractères sont à proportion fixe, c'est-à-dire une même surface d'écran – appelée «zone de caractère» – est réservée à chaque caractère indépendamment de la largeur du caractère. Sur la figure 32, la relation de temps entre un échappement horizontal et les lignes de balayage vertical dans la micro-trame est telle que le faisceau est dévié de façon que huit lignes de balayage vertical à 300 nanosecondes par ligne de balayage soit l'équivalent de cinq échappements de 480 nanosecondes chacun. En d'autres termes, chaque zone de caractère 40, 40' ou 40'' correspond à une largeur de cinq échappements, et le balayage vertical 39 est divisé en huit lignes de balayage. Comme cela sera expliqué dans la suite de façon plus détaillée, c'est durant ce balayage vertical dans une zone de caractère particulière que le générateur de caractères, en rendant sélectivement active la combinaison requise d'unités de ligne vidéo 41, permet au caractère alphanumérique d'être affiché et cycliquement rafraîchi. Dans l'exemple représenté sur la figure 32, la lettre «N» apparaît dans la zone de caractère 40 alors que la zone de caractère 40' reste «blanche». C'est-à-dire qu'il n'y a aucune unité de ligne vidéo active, et la zone de caractère 40'' contient une portion du caractère alphanumérique «F».

On va maintenant décrire la génération des caractères alphanumériques sur le tube d'affichage en synchronisation avec le balayage du tube CRT en se reportant aux figures 35 et 36 et, plus particulièrement, à l'étape à laquelle la mémoire-tampon 28 est chargée des multiplets de codes de caractères et de codes de commande des caractères à afficher. Immédiatement après le chargement des registres de lignes de balayage 42 et 43 par les données qui représentent la portion du dernier caractère précédent affiché sur les deux dernières lignes de balayage (septième et huitième lignes) de la zone réservée à ce caractère, le code de commande et le code de caractère du caractère suivant sont respectivement extraits de la mémoire-tampon par les bus 44 et 45 pour être chargés dans le registre de caractères 46 et le registre de commande 147. En utilisant la séquence des temps décrite préalablement, on a environ 600 nanosecondes pour retrouver dans les mémoires permanentes (ROS) 47 et 48 du générateur de caractères, la configuration vidéo sur les deux lignes de balayage suivantes qui sont les deux premières lignes de balayage du caractère suivant. A ce stade, on suppose que les données de caractère et de commande qui ont été respectivement chargées dans les registres 46 et 147 représentent un caractère normal à afficher sans changement de code de commande. L'adresse appliquée aux mémoires 47 et 48 comprend onze bits appliqués par les bus 54 et 49. Ces onze bits renferment les huit bits provenant du registre de caractères 46 envoyés sur le bus 50, et les trois bits provenant du compteur d'adresses 51 envoyés le long du bus 52. Sous la commande de la logique de commande de sortie 53 qui commande la génération des caractères de la même façon que la logique de commande d'entrée 24 commande l'acheminement des données de commande et d'instruction de caractères depuis la mémoire RAM du processeur, les deux premières lignes de balayage de la configuration de caractères sélectionnée sont respectivement envoyées des mémoires 47 et 48, par les bus 55 et 56, aux registres de balayage 42 et 43 qui ont été conditionnés pour une opération de chargement par un signal provenant de la logique de commande de sortie, par la ligne 57. Le registre de lignes de balayage 42 emmagasine les données indiquant la configuration par points ou par unités vidéo de la première ligne de balayage de la paire, tandis que le registre de balayage 43 procède de la même façon pour la seconde ligne de la paire.

De manière à mettre sélectivement en service les points d'une ligne de balayage donnée conformément aux données emmagasinées soit dans le registre 42, soit dans le registre 43, le générateur d'impulsions 75 sous la commande de la logique de commande de sortie 53, fournit une impulsion d'envoi soit à la porte 58 associée au registre de balayage 43 soit à la porte 59 associée au registre de balayage 42. De cette manière, le générateur d'impulsions conditionne la porte 58, par exemple, toutes les 15 nanosecondes afin qu'elle laisse passer les données provenant du registre de lignes de balayage 43, le long du bus 60 ou bien il conditionne la porte 59 pour qu'elle laisse passer les données provenant du registre de lignes de balayage 42, le long du bus 61. Ainsi, lorsqu'une ligne de balayage particulière est parcourue, les données indiquant s'il s'agit d'un affichage d'unités vidéo ou de points sont transmises par le bus 62, le multiplexeur à lignes à retard 63 qui fournit les retards d'interface nécessaires, et la ligne 65, aux circuits électroniques d'affichage 64 du tube cathodique CRT, pour y être affichées qui applique la configuration vidéo correspondante qui apparaît sur le tube CRT 13. Une fois achevées les deux premières lignes de balayage d'une zone de caractère donnée, la logique de commande de sortie 53 incrémente le compteur d'adresses 51 à l'aide d'un signal approprié sur la ligne 66 afin de changer l'entrée à trois bits provenant du compteur d'adresses 51, par le bus 52, ce qui a pour effet de permettre aux mémoires 47 et 48 du générateur de caractères de fournir respectivement les deux lignes de balayage suivantes de la zone de caractère alors balayée. Après quoi, la procédure ci-dessus se répète jusqu'à obtention similaire de l'adresse des deux lignes de balayage suivantes de la zone de caractère, opération qui se répète pour les huit lignes de balayage à la suite desquelles le caractère doit être affiché. La formation d'un caractère est indiquée par un signal sur le bus 67 en provenance soit de la mémoire 47 soit de la mémoire 48 du registre de caractères. Après quoi, la logique de commande de sortie envoie une nouvelle demande de caractère, sur la ligne 68, à la logique de commande d'entrée 24, et cette logique 24 amorce la procédure décrite préalablement pour obtenir le caractère suivant provenant de la mémoire RAM 16 du microprocesseur.

La logique de commande des figures 35 et 36 est pourvue de moyens pour placer spatialement les caractères emmagasinés dans une mémoire, telle que celle représentée sur la figure 4, dans laquelle l'information concernant la position spatiale est emmagasinée séquentiellement avec les caractères correspondants. On suppose avoir une opération d'espacement qui est indiquée par un code d'espacement, à savoir le code spc (0-255); la valeur entre parenthèses indiquant le nombre d'espacements. Dans ce cas, et en référence aux figures 35 et 36, en supposant que l'on ait un code d'espacement spc (150), la première entrée provenant de la mémoire RAM 16 en direction du registre d'entrée 28 est alors le code de commande indiquant une opération d'espacement. Alors, la logique de commande 24 qui a examiné les données présentes dans le registre 23, par le bus 27, détermine que l'on a affaire à un code de commande d'espacement. Ensuite, sous la direction de la logique de commande d'entrée 24, le multiplet de données suivant qui indique le nombre 150 passe dans la mémoire-tampon 28 avec le code de commande d'espacement, et n'est pas chargé dans le registre de caractères 46, mais, en revanche, passe dans le compteur d'espacement 69 qui a été conditionné, par l'entremise de la porte 71 et de la ligne 70, par le code de commande d'espacement présent dans le registre de commande 147. Le compteur 69 est alors décrémenté par l'horloge de 480 nanosecondes, 72 (qui correspond à la vitesse d'échappement). Aussi longtemps qu'il reste un compte dans le compteur 69, un signal est appliqué, par la ligne 73, à la logique de commande de sortie 53 qui, à son tour, inhibe le générateur d'impulsions 75. Ainsi, il n'y a aucun signal appliqué depuis le générateur d'impulsions 75 aux portes de conditionnement 58 et 59, et les lignes de balayage restent «blanches» c'est-à-dire, qu'aucun caractère n'est affiché. Lorsque le compteur 69 est à zéro, un signal «O» est appliqué par la ligne 73 à la logique de commande de sortie 53 et le générateur d'impulsions 75 recommence à envoyer des impulsions afin de permettre l'affichage du caractère suivant à la position repérée.

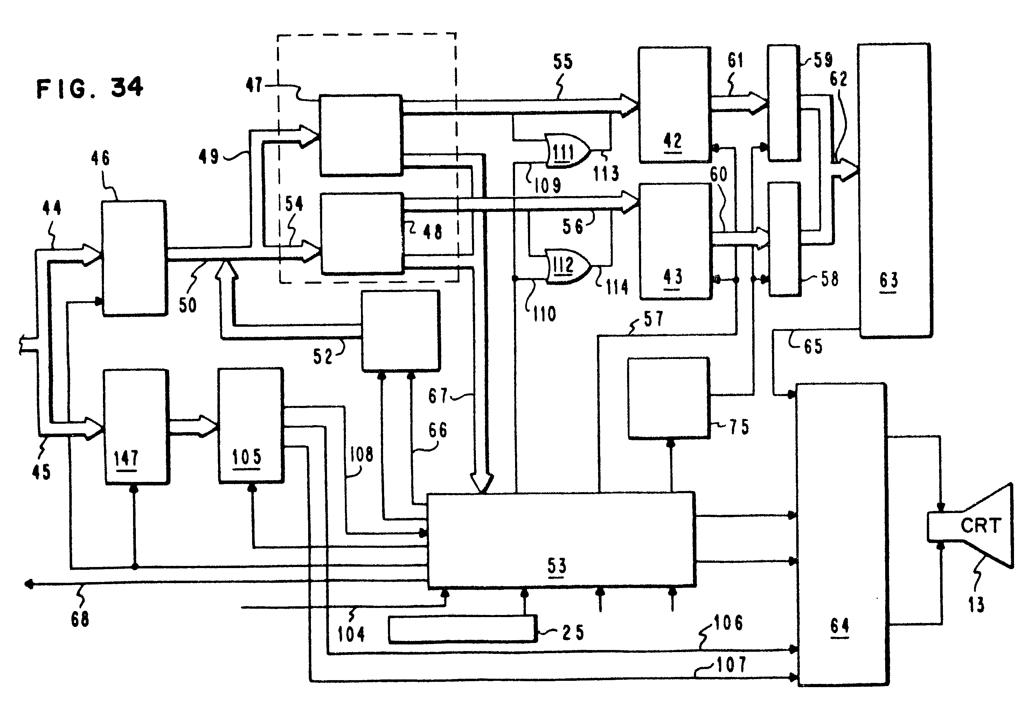

La logique de commande d'un autre système d'affichage va maintenant être décrit en référence aux figures 33 et 34, mode de réalisation dans lequel l'organisation de la mémoire fournissant le moyen d'emmagasinage à accès séquentiel des représentations codées des caractères affichés, est partagée en deux unités de mémoire, à savoir, une unité de mémoire matricielle qui emmagasine uniquement les données représentant les positions des caractères affichés, comme le montre la figure 2, unité dans laquelle les positions de bit «1» correspondent spatialement aux positions des caractères alphanumériques respectifs affichés sur le tube CRT, et une seconde unité de mémoire, comme le montre la figure 3, dans laquelle les représentations codées des caractères affichés sont emmagasinées suivant la même séquence que celle des emplacements de l'information de position de la figure 2 et, en conséquence, suivant la même séquence que celle du balayage des caractères sur le tube d'affichage.

Les figures 33 et 34 représentent et modification de la logique de commande des figures 35 et 36 pour placer spatialement les caractères affichés en utilisant les deux moyens d'emmagasinage qui fonctionnent ensemble à la place d'un seul moyen d'emmagasinage. Étant donné que la plupart des fonctions de la logique de contrôle des figures 33 et 34 sont identiques à celles décrites préalablement en référence aux figures 35 et 36, les figures 33 et 34 utilisant les mêmes références numériques pour désigner les unités fonctionnelles qui restent inchangées, le fonctionnement de ces unités ne sera pas décrit à nouveau. La description suivante portera essentiellement sur les unités fonctionnelles supplémentaires ou modifiées. Sur la figure 33, une portion 116 de la mémoire RAM 16 contient une matrice de positions du type illustré sur la figure 2. Une autre portion 116' de la mémoire RAM 16 contient des données de code de caractère, comme le montre la figure 3, dans un ordre séquentiel, sans aucune information de position. En référence aux figures 33 et 34, on va étudier la façon dont les positions dans lesquelles les données de caractère et de commande de caractère emmagasinées séquentiellement dans la section 116' de la mémoire RAM 16, sont affichées par le système générateur de caractères de la figure 34 à la position spatiale appropriée. Pour adresser la mémoire RAM 16, il y a un compteur d'adresses 119 qui, comme le compteur d'adresses 19, se trouve sous la commande de la logique de commande d'entrée 24. Ce dernier, en conditionnant respectivement les lignes 100 et 101, peut actionner soit le compteur d'adresses 119 qui adresse les multiplets de données dans la mémoire de position 116, soit le compteur d'adresses 19 puis, de la manière décrite préalablement en référence aux figures 35 et 36 adresse les données de code de caractère emmagasinées séquentiellement dans la section de mémoire 116'. Indépendamment du compteur d'adresses sélectionné, la section appropriée de la mémoire RAM 16 est adressée de la manière décrite préalablement (figure 35) par l'entremise du sélecteur d'adresses 17, et la sortie de données provenant de la mémoire RAM 16 est envoyée, par le dispositif de sélection de données 20, au registre d'entrée 23, comme cela a été décrit préalablement.

En sélectionnant une séquence d'instructions appropriée, la logique de commande d'entrée 24 a la possibilité de conditionner le compteur d'adresses 19, par la ligne 101, pour adresser la section de mémoire 116', donc, de charger la mémoire-tampon à 16 bits 28 d'une séquence de données de codes de commande et de codes de caractère, comme cela a été décrit préalablement. Ces données sont prêtes à être appliquées au générateur de caractères et, ensuite, au registre de lignes de balayage 42 et 43 sous la commande de la logique de commande de sortie 53, de la manière décrite préalablement en référence à la figure 36. Cependant, dans le mode de réalisation des figures 33 et 34, la position à laquelle chaque caractère séquentiel doit être affiché, est déterminée par la logique de commande d'entrée 24 qui conditionne le compteur d'adresses 119, par la ligne de conditionnement 100, de sorte qu'il adresse l'unité de mémoire matricielle 116. La logique de commande d'entrée 24 envoie la sortie de données de position provenant de l'unité matricielle 116, par l'entremise du registre d'entrée 23, au registre de position 102. Dans cette séquence d'adressage, le multiplet suivant de données de position provenant de l'unité 116, comme le montre la figure 2, a été transféré sur le registre de position 102. Ensuite, l'horloge de 480 nanosecondes, 103 (qui représente la vitesse d'échappement) décompte les huit bits de données chargés dans le registre de position 102 (chacun de ces bits représentant une position de caractère) jusqu'à ce que soit atteint un bit «1» qui détermine qu'un caractère doit être affiché à la position de caractère représentée par le bit «1». Lorsqu'il en est ainsi, un signal de caractère est envoyé sur la ligne 104 à la logique de commande de sortie 53 (figure 34). En revanche, lorsque le multiplet de données transféré de l'unité de mémoire 116 au registre 102 ne contient que des «0», la procédure d'adressage se répète et le multiplet de données suivant de la séquence est transféré au registre de position 102 à partir de l'unité de mémoire de position 116, et la séquence se répète jusqu'à ce qu'un bit «1» produise un signal sur la ligne 104. La logique de commande de sortie 53 inhibe le générateur d'impulsions 75 (dont le fonctionnement a déjà été décrit préalablement en référence à la figure 36. En conséquence, aucune impulsion n'est appliquée à la porte 58 ou à la porte 59, portes qui sont respectivement associées aux registres 43 et 42. Ainsi, les lignes de balayage restent «blanches» et aucun caractère n'est affiché à la position de caractère particulière représentée par les bits «0» du multiplet de données provenant de l'unité de mémoire de position 116. Lorsqu'un bit «1» dans l'unité de mémoire de position du registre 102, produit finalement un signal de caractère sur la ligne 104, la logique de commande de sortie 53 actionne le générateur d'impulsions 75, qui, à son tour, conditionne les portes 58 et 59 pour permettre au caractère suivant emmagasiné dans la mémoire ROS 47 et dans la mémoire ROS 48 du générateur de caractères d'être affiché sur le tube cathodique CRT 13 à la position représentée par le bit «1» du multiplet de données provenant de l'unité de mémoire de position 116 du tube CRT 13 de la manière décrite préalablement en référence à la figure 36.

D'après les descriptions précédentes du système en référence d'une part aux figures 35 et 36 et d'autre part aux figures 33 et 34, il est à remarquer que, en ce qui concerne la position spatiale du caractère engendré, la combinaison du registre de position 102 et de l'horloge 103 traite les données spatiales provenant de l'unité de mémoire 116 de la même manière que le fait la combinaison du compteur 69 et de l'horloge 72 des figures 35 et 36, lorsqu'elle traite les données spatiales emmagasinées avec les données de code de commande et de caractère du système.

En référence aux figures 35 et 36, on va étudier la façon de traiter un code de commande associé à un caractère particulier. Bien que cette étude se fasse à l'aide du système des figures 35 et 36, les circuits impliqués dans cette fonction sont rigoureusement identiques à ceux des fgiures 33 et 34. Comme cela a été mentionné préalablement, lorsqu'il n'y a pas d'information de commande associée à un caractère particulier, par exemple, lorsqu'il n'y a pas de soulignement ou de demi-interlignage, etc., alors que la désignation particulière de code de caractère est emmagasinée dans le registre de caractères 46, un code de commande blanc accompagne le caractère et est emmagasiné dans le registre 147 en ayant toutefois aucun effet. En revanche, lorsqu'il y a un code de commande associé au caractère, ce code de commande est emmagasiné dans le registre 147. Par exemple, supposons que le code de commande soit le code de début de soulignement CDS, comme cela a été mentionné préalablement pour la lettre «i» de la figure 11. Ce code en provenance du registre 47 est chargé dans le registre de commande d'affichage 105. Lorsque ce code de commande se trouve dans le registre de commande d'affichage 105, durant l'affichage des caractères «i» et «s» (figure 11), le registre de commande 105 fournit un signal sur la ligne 108, à la logique de commande de sortie 53 qui fournit les signaux de soulignement, par les lignes 109 et 110, aux portes respectives 111 et 112 pour que celles-ci fassent passer un signal de soulignement par les lignes 113 et 114, aux registres 42 et 43, ainsi que les configurations de ligne de balayage appliquées à ces registres, par les bus 55 et 56. Ceci fait qu'une portion de la configuration de soulignement apparaît au bas de chaque configuration de ligne de balayage afin de souligner les lettres «is», comme le montre la figure 8. Puis, avec le code de fin de soulignement (CFS) qui suit la lettre «s», figure 11, le registre de commande 105 met fin au soulignement par la ligne 106.

Lorsque les codes de commande de demi-interlignage, et de demi-interlignage dans le sens inverse accompagnent un caractère particulier, le registre de commande 105 commande les circuits électroniques 64 du tube d'affichage CRT, à l'aide de signaux sur les lignes 106 et 107 afin de soumettre le caractère affiché à un demi-interlignage vers le haut et à un demi-interlignage vers le bas.

En référence aux figures 12, 13 et 14, on va maintenant décrire l'affichage de caractères alphanumériques à espacement proportionnel utilisé selon le procédé revendiqué. A titre d'exemple, la figure 12 montre une portion du tube CRT sur lequel est affichée une portion de page portant des données alphanumériques à espacement proportionnel. Par «données à espacement proportionnel», on entend les données qui sont uniformément espacées indépendamment de la largeur des caractères. A cette fin, les zones de caractères, c'est-à-dire, la largeur de l'échappement réservé au caractère particulier à la position d'affichage particulière, doit avoir une largeur variable. Dans les opérations d'affichage décrites préalablement, les zones de caractère à chaque position d'affichage correspondaient à cinq unités d'échappement correspondant chacune à un temps de 480 nanosecondes. Avec l'espacement proportionnel, la largeur des zones de caractère peut être quelconque, allant de trois à sept de ces unités d'échappement de 480 nanosecondes. Ainsi, en utilisant une unité de mémoire matricielle de position pour emmagasiner l'agencement spatial des caractères, il faut utiliser une matrice, du type représenté sur la figure 13, dans laquelle ce n'est pas la position du caractère qui est représentée par un seul bit, mais chaque unité d'espacement. Lorsqu'il n'y a pas de caractère, on a simplement une chaîne de 0 jusqu'à la position d'échappement suivante où la présence d'un «1» indique le début d'un caractère. Avec cet agencement, chaque espacement peut être représenté par une chaîne de cinq «0» représentant cinq unités d'échappement, tandis que la zone de caractère réservée à des caractères étroits peut comprendre trois unités d'échappement, à savoir, deux bits «1» suivis par un bit «0» – comme le montre la figure 13 en 115, position qui représente le caractère étroit «I» de l'affichage de la figure 12, ou bien quatre bits «1» suivis par un bit «0» – comme le montre la figure 13 en 117, position qui représente le caractère «S» de l'affichage de la figure 12. Dans cet agencement, le caractère «W» serait représenté par sept unités d'échappement, à savoir, six «1» et le bit «zéro», ce dernier bit servant à délimiter les caractères entre eux.

Avec ces caractères à espacement proportionnel de dimension variable, la logique de commande d'affichage décrite préalablement en référence aux figures 33 et 34 fonctionne de la manière décrite si ce n'est, bien entendu, que le signal de caractère sur la ligne 104 en provenance du registre de position 102 pour passer à la logique de commande de sortie 53, signale simplement qu'une portion d'un caractère doit être affichée à cette position d'échappement. Ainsi, par exemple, pour un caractère ayant une zone de caractère de six positions d'échappement, une chaîne de cinq «1» est appliquée à la logique de commande 53, par la ligne de signal 104, tandis qu'un caractère étroit occupant uniquement trois positions d'échappement correspond à une chaîne de deux «1» appliquée par la ligne 104 à la logique de commande 53. Tant que la chaîne de «1» du caractère particulier est appliquée à la logique de commande 53, le générateur d'impulsions est actionné pour fournir les signaux décrits préalablement qui conditionnent les portes 58 et 59 pour transmettre les configurations de lignes de balayage depuis les registres de lignes de balayage 43 et 42. Pour maintenir la synchronisation entre la position d'échappement et le caractère alors affiché, le générateur de caractères, (c'est-à-dire les mémoires ROS 47 et 48), fournit la configuration de caractère sur un moins grand nombre de lignes de balayage pour un caractère étroit, et sur un plus grand nombre de lignes de balayage pour un caractère large.

Initialement à un procédé de déplacement d'un bloc de caractères de longueur fixe, la figure 15 montre un affichage CRT dans lequel un bloc de données alphanumériques est affiché sur deux colonnes. Le curseur de la figure 15 est indiqué par le tiret 81. Dans cet agencement, l'organisation de la mémoire comprend deux unités qui fonctionnent simultanément chacune étant représentée sur les figures 16 et 17. La mémoire matricielle de la figure 16 montre la position des caractères alphanumériques affichés sur la figure 15 tandis que la figure 17 montre la mémoire à accès séquentiel qui contient les caractères en séquence. Il est à noter que, où le curseur n'est pas sous un caractère particulier comme dans le cas de l'affichage de la figure 15, ce curseur a sa position désignée par un bit «1» dans la mémoire matricielle, figure 16, et est emmagasiné en tant que caractère discret dans la mémoire à accès séquentiel de la figure 17.

La figure 18 représente schématiquement l'organisation de la mémoire unique qui remplit à elle seule, dans le système des figures 35 et 36, les fonctions des moyens d'emmagasinage des figures 16 et 17.

Pour illustrer le procédé de modification du format d'une portion, ou segment, de la page affichée, on va tout d'abord, en référence aux figures 15 à 17, 19 à 21, 23 à 25 et 27 à 29, illustrer la procédure qui utilise l'organisation de mémoire représentée sur les figures 16 et 17 où les données des caractères et les données des codes de caractères sont emmagasinées dans un moyen d'emmagasinage séquentiel distinct, figure 17, et où l'information de position et d'espace est emmagasinée dans un moyen d'emmagasinage matriciel (figure 16).

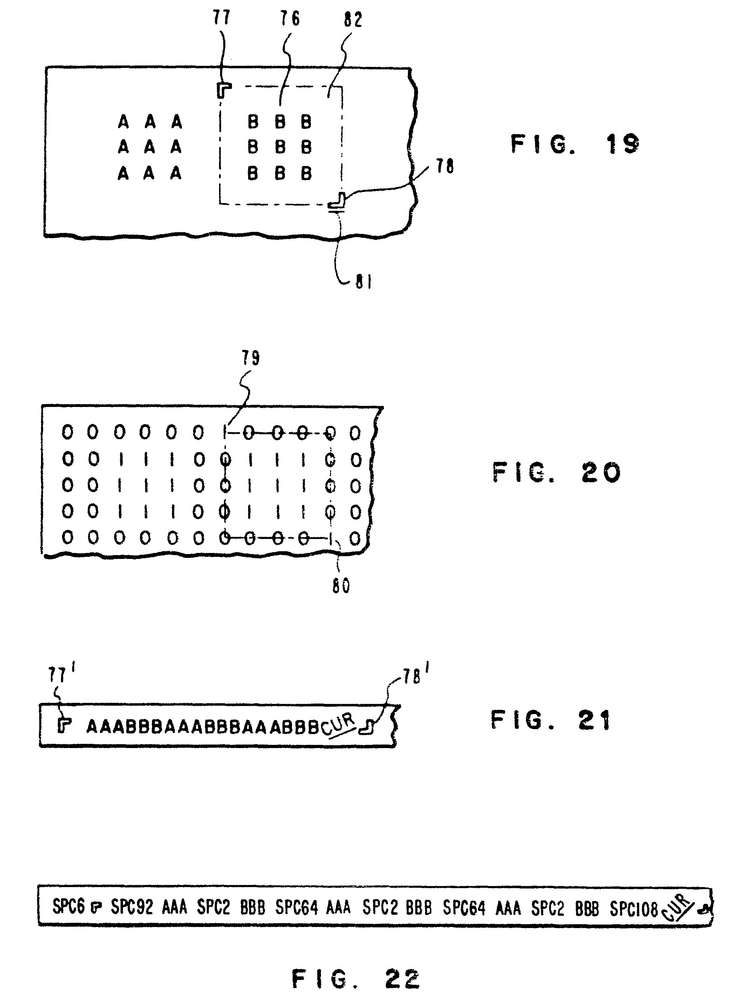

Tout d'abord, en référence aux figures 15 à 17, supposons que l'on veuille définir toutes les données de la colonne 76 sur la figure 15. A l'aide d'un moyen d'entrée à touches, approprié dans le système de traitement de texte dont fait partie le microprocesseur 12 (figure 33), le «crochet initial de définition de segment» 77 et le «crochet final de définition de segment» 78 sont introduits dans le tube CRT, figure 19. Cette opération se fait en emmagasinant des bits «1» 79 et 80 dans le moyen d'emmagasinage matriciel de position, figure 20 et en emmagasinant la représentation du crochet initial 77' et la représentation du crochet final 78' dans le moyen d'emmagasinage séquentiel représenté sur la figure 21. Il est à noter, en référence à la figure 20, que, étant donné que la ligne de curseur 81 du tube cathodique se trouve sur le tube cathodique CRT sous la représentation du crochet final, c'est-à-dire, le bit «1» 80 de la figure 21 représente la position du crochet ainsi que celle du curseur, le curseur n'est plus emmagasiné en tant que caractère discret dans la mémoire séquentielle de la figure 21 mais en tant que désignation du code de caractère «CUR». Lorsque les crochets 77 et 78 sont placés de la façon représentée sur la figure 19, le microprocesseur 12, figure 33, a la possibilité logique de définir, le segment ou la portion de données numériques 82 tel qu'il est défini par les lignes discontinues du tube CRT de la figure 19 ainsi que par les lignes discontinues de la mémoire matricielle de position de la figure 20. Lorsque ce segment est défini de cette façon, la logique du microprocesseur peut maintenant traiter le contour du segment défini de la même manière que le sont les marges d'une page durant les opérations de remise au format d'un texte telles que justification, réglage, entrée au clavier des colonnes, décalage des colonnes, et définition des marges des colonnes.

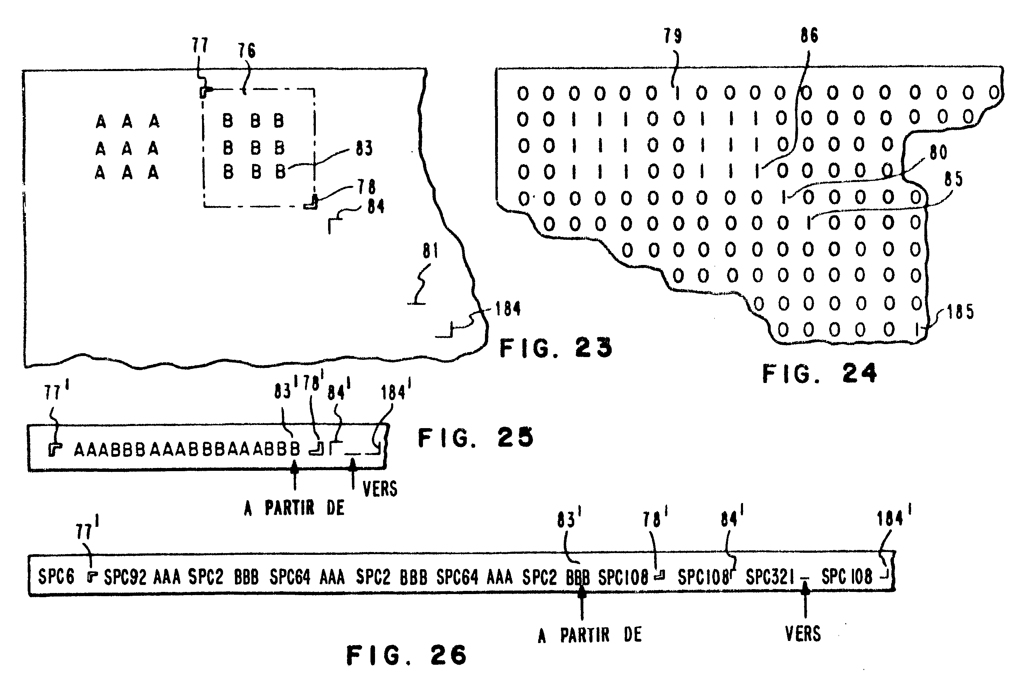

Pour illustrer un simple décalage de colonne en référence aux figures 23 à 25, supposons que la colonne 76 doive être déplacée de sorte que le caractère «B» 83, figure 23, soit décalé sur la position indiquée par le curseur 81 de la figure 23 et que le reste de la colonne 76 doive être déplacé de sorte qu'elle occupe des positions équivalentes par rapport au caractère «B» 83. Tout d'abord, l'opératrice définit le bloc de «déplacement» en déplaçant le curseur sur la position du «crochet initial de définition de segment» 84 et en entrant ce crochet au clavier, opération suivie par le déplacement du curseur sur la position du «crochet final de définition de segment» 184 et par l'entrée au clavier de ce crochet. Cette entrée au clavier fait que la logique du microprocesseur insère les bits «1» 85 et 185 dans la mémoire matricielle de position de la figure 24 aux positions correspondant respectivement aux crochets 84 et 184 de la figure 23. Le microprocesseur insère également les représentations 84' et 184' des crochets respectifs de «déplacement vers initial» et de «déplacement vers final» dans le moyen d'emmagasinage séquentiel, figure 25, aux positions séquentielles qui doivent être occupées par la représentation de ces crochets de «déplacement vers».

A la suite de la définition des positions de «déplacement vers» de la colonne, le premier caractère de la colonne à déplacer, «B» 83, est déplacé en déplaçant tout d'abord le curseur 81 de la figure 23 à une position placée sous le caractère «B» 83 et en entrant au clavier une commande de «déplacement à partir de». A la suite de cette entrée au clavier, le microprocesseur insère un pointeur «à partir de» à la représentation 83′ du caractère «B» dans la mémoire séquentielle représentée sur la figure 25. Le curseur est ensuite déplacé à la position représentée sur la figure 23 qui est la position à laquelle doit être déplacé le caractère «B» 83, et l'opératrice introduit au clavier une commande de «déplacement vers» qui se traduit par un pointeur «vers» qui indique alors la position séquentielle que doit occuper la représentation 83′ du caractère «B» une fois le déplacement réalisé.

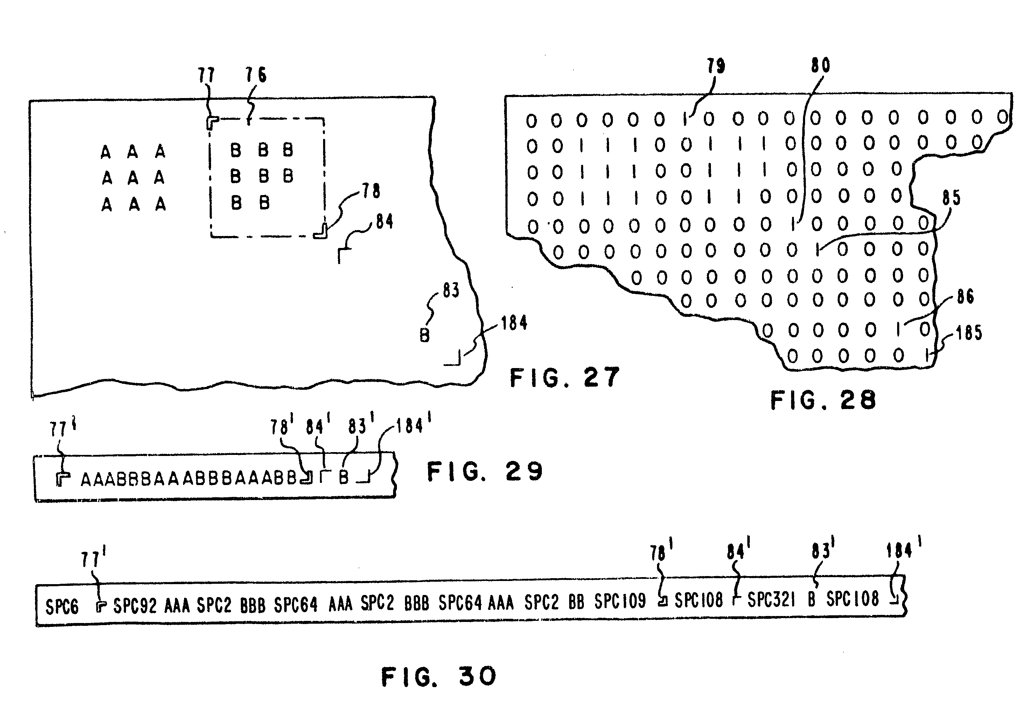

A ce stade, l'opératrice envoie la commande «de déplacement» à laquelle répond le microprocesseur qui contrôle l'opération en procédant au changement représenté sur les figures 27 à 29. Le bit «1» 86 qui représente la position du caractère «B» 83 dans la mémoire matricielle de position, est supprimé de sa position initiale (figure 24) pour passer à sa position finale comme le montre la figure 28. La représentation 83′ du caractère «B» dans le moyen d'emmagasinage séquentiel est supprimée de la position initiale qu'elle occupait dans le moyen d'emmagasinage séquentiel de la figure 25 pour passer à la position qui est représentée dans le moyen d'emmagasinage séquentiel de la figure 29. A la suite de quoi, la combinaison du moyen d'emmagasinage matriciel de position de la figure 28 et du moyen d'emmagasinage séquentiel de la figure 29 fournit l'agencement de «déplacement vers» affiché sur le tube cathodique CRT de la figure 27.

Lorsque ce déplacement initial est terminé, le caractère «B» suivant provenant de la colonne 76 est déplacé de la même manière jusqu'à ce que toute la colonne soit déplacée. Après quoi, les crochets 77, 78 et 84 et 184 sont effacés de l'affichage pour laisser place à une nouvelle opération.

La séquence des étapes de traitement impliquées dans la définition d'un segment sur le tube CRT et dans la remise en forme d'une portion de ce segment qui a été décrite en référence aux figures 15 à 17, 19 à 21, 23 à 25 et 27 à 29 utilise un moyen d'emmagasinage dans lequel les informations de position et de caractère sont emmagasinées séparément.

Les figures 18, 22, 26 et 30, qui sont des représentations schématiques d'une seule mémoire dans laquelle l'information spatiale ainsi que les représentations des données codées des caractères sont emmagasinées, montrent la séquence ci-dessus des étapes impliquées dans la remise en forme de l'affichage de la figure 15 pour donner finalement l'affichage de la figure 27 en mettant en évidence les changements qui ont été effectués dans un seul moyen d'emmagasinage afin de montrer l'évolution des changements sur le tube CRT. Dans ce cas la séquence des changements est mise en évidence par l'organisation du moyen d'emmagasinage des figures 18, 22, 26 et 30, qui, bien entendu, a une organisation semblable au moyen d'emmagasinage décrit préalablement en référence à la figure 4.

**Revendications**

1. Procédé de déplacement d'un bloc de caractères de texte de largeur variable sur un tube d'affichage (13), dans un système de traitement et d'affichage de texte comprenant: un microprocesseur (12), un moyen d'emmagasinage matriciel (116) pour emmagasiner des données numériques représentant les positions des caractères du texte à afficher sur le tube d'affichage, un moyen de balayage (64) des lignes de caractères sur le tube d'affichage, un moyen de lecture (17, 19, 119, 24) des emplacements dudit moyen d'emmagasinage matriciel en synchronisation avec ledit moyen de balayage, un moyen d'emmagasinage séquentiel (116′) pour emmagasiner séquentiellement les représentations codées des caractères à afficher selon la même séquence que celle du balayage des emplacements de caractères sur le tube d'affichage par ledit moyen de balayage, un moyen d'accès (20, 23) aux représentations codées des caractères dans ledit moyen d'emmagasinage séquentiel chaque fois que ledit moyen de lecture lit un emplacement dudit moyen d'emmagasinage matriciel comportant un caractère, et un moyen de commande (147, 105, 53) pour appliquer des signaux représentant le caractère à afficher audit moyen de balayage, en réponse à la représentation codée d'un caractère fournie par ledit moyen d'accès;

ledit procédé étant caractérisé en ce que:
— les données numériques emmagasinées dans ledit moyen d'emmagasinage matriciel pour représenter les positions de caractères à afficher, sont formées de valeurs binaires correspondant chacune à une unité d'échappement sur ledit tube d'affichage, chaque caractère de largeur variable étant représenté par une suite de bits de même valeur dont le nombre est fonction de la largeur du caractère à afficher suivie d'un bit de la valeur opposée, l'absence de caractère à afficher étant représentée par une suite de bits de ladite valeur opposée,
— il comprend les étapes suivantes:

1. a) placer le curseur à un emplacement du tube d'affichage définissant la position supérieure la plus à gauche du bloc devant être déplacé,

1. b) insérer par l'intermédiaire dudit microprocesseur, d'une part les données d'un premier caractère spécial initial dont la position est déterminée par le curseur sur le tube d'affichage définissant ladite position supérieure la plus à gauche dudit bloc, dans ledit moyen d'emmagasinage matriciel, et d'autre part la représentation codée dudit caractère spécial initial dans ledit moyen d'emmagasinage séquentiel à une position déterminée par son emplacement dans la séquence de balayage des caractères sur le tube d'affichage,

1. c) placer le curseur à un emplacement du tube d'affichage définissant la position inférieure la plus à droite du bloc devant être déplacé,

1. d) insérer par l'intermédiaire dudit microprocesseur, d'une part les données d'un premier caractère spécial final dont la position est déterminée par le curseur sur le tube d'affichage définissant ladite position inférieure la plus à droite dudit bloc, dans ledit moyen d'emmagasinage matriciel, et d'autre part la représentation codée dudit caractère spécial final dans ledit moyen d'emmagasinage séquentiel à une position déterminée par son emplacement dans la séquence de balayage des caractères sur le tube d'affichage,

1. e) placer le curseur à un emplacement du tube d'affichage définissant la position supérieure la plus à gauche du bloc à son nouvel emplacement,

1. f) insérer par l'intermédiaire dudit microprocesseur, d'une part les données d'un second caractère spécial initial dont la position est déterminée par le curseur sur le tube d'affichage définissant ladite position supérieure la plus à gauche du bloc à son nouvel emplacement, dans ledit moyen d'emmagasinage matriciel, et d'autre part la représentation codée dudit caractère spécial initial dans ledit moyen d'emmagasinage séquentiel à une position déterminée par son emplacement dans la séquence de balayage des caractères sur le tube d'affichage,

1. g) placer le curseur à un emplacement du tube d'affichage définissant la position inférieure la plus à droite du bloc à son nouvel emplacement, et

1. h) insérer par l'intermédiaire dudit microprocesseur, d'une part les données d'un second caractère spécial final dont la position est déterminée par le curseur sur le tube d'affichage définissant ladite position inférieure la plus à droite du bloc à son nouvel emplacement, dans ledit moyen d'emmagasinage matriciel, et d'autre part la représentation codée dudit caractère spécial final dans ledit moyen d'emmagasinage séquentiel à une position déterminée par son emplacement dans la séquence de balayage des caractères sur le tube d'affichage,

2) entrer des commandes qui, par l'intermédiaire du microprocesseur, suppriment les représentations codées des caractères du bloc aux positions qu'elles occupaient dans ledit moyen d'emmagasinage séquentiel et les insèrent aux positions occupées par lesdits caractères dans la séquence de balayage des caractères à afficher, lesdites commandes provoquant le déplacement simultané des données représentant lesdits caractères de leur position actuelle à la position désirée dans ledit moyen d'emmagasinage matriciel.

2. Procédé selon la revendication 1 caractérisé en ce que:

L'étape 2 consiste pour chaque caractère du bloc, à:

2. a) placer le curseur à la position du caractère à déplacer,

2. b) entrer au clavier une commande de déplacement «à partir de», qui, par l'intermédiaire dudit microprocesseur provoque l'insertion d'un pointeur dans ledit moyen d'emmagasinage séquentiel,

2. c) placer le curseur à la position à laquelle le caractère doit être placé,

2. d) entrer au clavier une commande de déplacement «vers», qui, par l'intermédiaire dudit microprocesseur, provoque l'insertion d'un pointeur dans ledit moyen d'emmagasinage séquentiel, et

2. e) entrer une commande qui par l'intermédiaire dudit microprocesseur, supprime la représentation codée dudit caractère à la position qu'il occupait dans ledit moyen d'emmagasinage séquentiel et l'insère à la position qu'il devra occuper dans la séquence de balayage des caractères à afficher, ladite commande provoquant le déplacement simultané des données représentant ledit caractère de sa position actuelle à la position désirée dans ledit moyen d'emmagasinage matriciel.

**Claims**

1. A method for moving a block of text characters of variable width on a display tube (13), in a text processing and display system comprising: a microprocessor (12), a matrix storage means (116) for storing digital data representative of the positions of the text characters to be displayed on the display tube, a means (64) for scanning the character lines on the display tube, a means (17, 19, 119, 24) for reading locations of said matrix storage means in timing relation with said scanning means, a sequential storage means (116′) for sequentially storing the coded representations of the characters to be displayed in the same sequence as the character locations are scanned on the display tube by said scanning means, a means (20, 23) for accessing to the characters coded representations in said sequential storage means when said reading means reads a location of said matrix storage means comprising a character, and a control means (147, 105, 53) for applying signals representative of the character to be displayed onto said scanning means in response to the coded representation of a character provided by said access means,

said method being characterized in that:

– the digital data stored in said matrix storage means to represent the locations of the characters to be displayed, are comprised of binary values, each binary value corresponding to an escape unit on said display tube, each character of variable width being represented by a series of bits of the same value the number of which is a function of the width of the character to be displayed followed by a bit of the opposite value, the absence of characters to be displayed being represented by a series of bits of said opposite value,

– it comprises the following steps:

1.a) placing the cursor into a location on the display tube defining the leftmost upper position of the block to be moved,

1.b) inserting through said microprocessor, the data of a first final special character the position of which is determined by the cursor on the display tube defining the rightmost lower position of said block in said matrix storage means on the one hand, on the other hand, the coded representation of said final special character into said sequential storage means into a location determined by the position thereof in the character scanning sequence on the display tube,

1.c) placing the cursor into a location of the display tube defining the rightmost lower position of the block to be moved,

1.d) inserting through said microprocessor, the data of a first final special character the position of which is determined by the cursor on the display tube defining said rightmost lower position of said block, in said matrix storage means on the one hand and, on the other hand, the coded representation of said final special character into said sequential storage means into a location determined by the position thereof in the character scanning sequence on the display tube,

1.e) placing the cursor into a location on the display tube defining the leftmost upper position of the block in the new location thereof,

1.f) inserting through said microprocessor the data of a second initial special character the position of which is determined by the cursor on the display tube defining said leftmost upper position of the block in the new location thereof, into said matrix storage means on the one hand and, on the other hand, the coded representation of said initial special character into said sequential storage means into a location determined by the position thereof in the character scanning sequence on the display tube,

1.g) placing the cursor into a location on the display tube defining the rightmost lower position of the block in the new location thereof and

1.h) inserting through said microprocessor the data of a second final special character the position of which is determined by the cursor on the display tube defining said rightmost lower position of the block in the new location thereof, into said matrix storage means and, on the other hand, the coded representation of said final special character into said sequential storage means into a location determined by the position thereof in the character scanning sequence on the display tube,

2) entering commands which, through the microprocessor, cancels the coded representations of the block characters in the positions occupied by said representations in said sequential storage means and inserts said representations into the locations occupied by said characters in the scanning sequence of the characters to be displayed, said commands causing a simultaneous displacement of the data representing said characters from their present position to the desired position in said matrix storage means.

2. A method according to claim 1 characterized in that: step 2 for each character of the block, consists in:

2.a) placing the cursor into the location of the character to be moved,

2.b) entering through the keyboard a "From" move command which, through said microprocessor, causes a pointer to be inserted into said sequential storage means,

2.c) placing the cursor into the location where the character is to be placed,

2.d) entering through the keyboard a "To" move command which, through said microprocessor, causes a pointer to be inserted into said sequential storage means, and

2.e) entering a command which, through said microprocessor, cancels the coded representation of said character in the position occupied by said character in said sequential storage means and inserts into the location to be occupied by said character in the scanning sequence of the character to be displayed, said command causing a simultaneous displacement of the data representing said character, from its present position to the desired position in said matrix storage means.

**Patentansprüche**

1. Verfahren für die Bewegung eines Textzeichenblocks veränderlicher Breite auf einer Anzeigeröhre (13) in einem Textverarbeitungs- und Anzeigesystem mit: einem Mikroprozessor (12), einem matriziellen Speichermittel (116) für die Speicherung der digitalen Daten, welche die Positionen der auf der Anzeigeröhre anzuzeigenden Textzeichen darstellen, einem Abtastmittel (64) der Zeichenzeilen auf der Anzeigeröhre, einem Wiedergabemittel (17, 19, 119, 24), der Stellen des besagten Mittels für matrizielle Speicherung in Synchronisation mit dem besagten Abtastmittel, einem sequentiellen Speichermittel (116′) für die sequentielle Speicherung der codierten Darstellungen der anzuzeigenden Zeichen in der gleichen Sequenz der Abtastsequenz der Zeichenstellen an der Anzeigeröhre durch das besagte Abtastmittel, ein Zugriffsmittel (20, 23) zu den codierten Zeichendarstellungen in besagtem Mittel sequentieller Speicherung, so oft das besagte Lesemittel eine Stelle des besagten matriziellen Speichermittels, welches ein Zeichen enthält, liest, und ein Steuermittel (147, 105, 53) zum Anlegen von Signalen, welche das anzuzeigende Zeichen darstellen, mit dem besagten Abtastmittel in Antwort auf die codierte Darstellung eines vom besagten Zugriffsmittel gelieferten Zeichens.

Wobei das besagte Verfahren dadurch gekennzeichnet ist, dass:

– die in besagtem matriziellen Speichermittel gespeicherten digitalen Daten für die Darstellung der anzuzeigenden Zeichenpositionen aus binären Werten bestehen, die jeweils einer Stelleneinheit in der besagten Anzeigeröhre entsprechen, und jedes Zeichen mit veränderlicher Breite durch eine Folge von Bits gleichen Wertes dargestellt ist, deren Anzahl abhängig von der Breite des anzuzeigenden Zeichens ist, gefolgt von einem Bit des entgegengesetzten Wertes, wobei das Fehlen eines anzuzeigenden Zeichens durch eine Folge von Bits des entgegengesetzten besagten Wertes dargestellt wird;

– und folgende Schritte enthält:

1.a) den Kursor auf eine Stelle der Anzeigeröhre bringen, die die obere Position definiert, die sich ganz links in dem zu bewegenden Block befindet,

1.b) Einfügen einerseits der Daten eines ersten besonderen Anfangszeichens, dessen Position durch den Kursor auf der Anzeigeröhre bestimmt ist, und die besagte Position links oben in besagtem Block definiert, in dem besagten matriziellen Speichermittel, und andererseits der codierten Darstellung des besagten besonderen Anfangszeichens in besagtem sequentiellen Speichermittel auf einer Position, die durch ihre Stelle in der Abtastfolge der Zeichen auf der Anzeigeröhre bestimmt ist, über den besagten Mikroprozessor,

1.c) Einsetzen des Kursors auf einer Stelle der Anzeigeröhre, welche die untere Position ganz rechts vom zu bewegenden Block definiert,

1.d) Einfügen einerseits der Daten eines ersten besonderen Endzeichens, dessen Position durch den Kursor auf der Anzeigeröhre bestimmt ist, welche die besagte Position des besagten Blocks ganz rechts unten definiert, in die besagten matriziellen Speichermittel und andererseits codierte Darstellung des besagten speziellen Endzeichens im besagten sequentiellen Speichermittel in einer Position, welche durch ihre Stelle in der Abtastfolge der Zeichen auf der Anzeigeröhre bestimmt ist, über den besagten Mikroprozessor,

1.e) Einsetzen des Kursors an einer Stelle der Anzeigeröhre, welche die Position des Blocks ganz links oben an seiner neuen Stelle definiert,

1.f) Einfügen einerseits der Daten eines speziellen zweiten Anfangszeichens, dessen Position durch den Kursor auf der Anzeigeröhre bestimmt ist, und besagte Position des Blocks ganz links oben an seiner neuen Stelle definiert, in dem besagten matriziellen Speichermittel, und andererseits codierte Darstellung des besagten speziellen Anfangszeichens im besagten sequentiellen Speichermittel in einer Position, welche durch ihren Standort in der Zeichenabtastsequenz an der Anzeigeröhre bestimmt ist, über den besagten Mikroprozessor,

1.g) Einsetzen des Kursors an einer Stelle der Anzeigeröhre, welche die Position des Blocks ganz rechts unten an seiner neuen Stelle festlegt, und

1.h) Einfügen einerseits der Daten eines besonderen zweiten Endzeichens, dessen Position vom Kursor auf der Anzeigeröhre festgelegt ist und besagte Blockposition ganz rechts unten an seiner neuen Stelle definiert, in das besagte matrizielle Speichermittel und andererseits codierte Darstellung des besagten besonderen Endzeichens im besagten sequentiellen Speichermittel in einer Position, welche durch ihre Stelle in der Zeichenabtastsequenz auf der Anzeigeröhre bestimmt ist, über den besagten Mikroprozessor,

2) Eingabe von Steuerelementen, welche über den Mikroprozessor die codierten Darstellungen der Zeichen des Blocks in den Positionen, die sie in den besagten sequentiellen Speichermitteln einnahmen, löschen und sie in den Positionen einfügen, welche von den besagten Zeichen in der Abtastfolge der anzuzeigenden Zeichen genommen wurden, wobei die besagten Steuerelemente die gleichzeitige Bewegung der Daten, welche die besagten Zeichen darstellen, aus ihrer gegenwärtigen in die gewünschte Position im besagten matriziellen Speichermittel bewirken.

2. Verfahren gemäss Anspruch 1, gekennzeichnet wie folgt:

Die Stufe 2 besteht für jedes Zeichen des Blockes darin,

2.a) den Kursor an die Position des zu bewegenden Zeichens zu setzen,

2.b) mit der Tastatur eine Bewegungssteuerung «von» einzugeben, welche über den besagten Mikroprozessor die Einfügung eines Zeigers im besagten sequentiellen Speichermittel bewirkt,

2.c) den Kursor an die Position zu setzen, an welche das Zeichen gesetzt werden soll,

2.d) mit der Tastatur einen Bewegungsbefehl «zu» eingeben, welcher über den besagten Mikroprozessor das Einfügen eines Zeichers in besagtem sequentiellen Speichermittel bewirkt, und

2.e) ein Steuerelement einzugeben, welches über den besagten Mikroprozessor die codierte Darstellung des besagten Zeichens in der Position löscht, welche es in besagtem sequentiellen Speichermittel einnahm, und in die Position bringt, die es in der Abtastsequenz der anzuzeigenden Zeichen einnehmen soll, wobei die besagte Steuerung die gleichzeitige Bewegung der Daten bewirkt, welche das besagte Zeichen darstellen, aus seiner gegenwärtigen Position in die gewünschte Position in besagtem matriziellen Speichermittel.

0 020 932

NOW IS THE
TIME FOR

FIG. 1

FIG. 2

NOWISTHETIMEFOR

FIG. 3

SPC203 NOW SPC IS SPC THE SPC68 TIME SPC FOR

FIG. 4

N O W   I S   T H E         C O L O N N E 2
T I M E   F O R               C O L O N N E 2
                                   C O L O N N E 2

**F I G.   5**

```
0 0 0 0 0 0 0 0 0 0 0 0 0 0 0 0 0 0 0 0 0 0 0 0 0 0
0 0 0 0 0 0 0 0 0 0 0 0 0 0 0 0 0 0 0 0 0 0 0 0 0 0
0 0 0 1 1 1 0 1 1 0 1 1 1 0 0 0 1 1 1 1 1 1 1 1 1 0
0 0 0 1 1 1 1 1 0 1 1 1 0 0 0 0 0 1 1 1 1 1 1 1 1 0
0 0 0 0 0 0 0 0 0 0 0 0 0 0 0 0 1 1 1 1 1 1 1 1 1 0
0 0 0 0 0 0 0 0 0 0 0 0 0 0 0 0 0 0 0 0 0 0 0 0 0 0
0 0 0 0 0 0 0 0 0 0 0 0 0 0 0 0 0 0 0 0 0 0 0 0 0 0
0 0 0 0 0 0 0 0 0 0 0 0 0 0 0 0 0 0 0 0 0 0 0 0 0
0 0 0 0 0 0 0 0 0 0 0 0 0 0 0 0 0 0 0 0 0 0 0
0 0 0 0 0 0 0 0 0 0 0 0 0 0
```

**F I G.   6**

NOWISTHECOLONNE2TIMEFORCOLONN2COLONNE2

**F I G.   7**

$$N \quad O \quad W \quad \underline{I \; S} \quad T \quad H \quad E \quad T \quad I \quad M \quad E \quad . \quad 2^{N} - 1$$

FIG. 8

```
0 0 0 0 0 0 0 0 0 0 0 0 0 0 0 0 0 0 0 0 0 0 0 0 0 0 0 0 0
0 0 1 1 1 0 1 1 0 1 1 1 0 1 1 1 1 1 0 1 1 1 0 1
0 0 0 0 0 0 0 0 0 0 0 0 0 0 0 0 0 0 0
0 0 0 0 0 0 0 0
```

FIG. 9

NOW CDS IS CFS THE TIME. 2 RH N HI − 1

FIG. 10

SPC102 NOW SPC CDS IS CFS SPC THE SPC TIME. SPC3 2 RH N HI − 1

FIG. 11

NOW    IS    THE

FIG.  12

115    117

0000000 0000000000 000000000
0000000 01 1011 110 000000
0000000 00000

FIG.  13

NOWISTHE

FIG.  14

81    76

A  A  A  ·  B B B
A  A  A     B B B
A  A  A     B B B

FIG.  15

0 0 0 0 0 0 1 0 0 0 0 0
0 0 1 1 1 0 0 1 1 1 0 0
0 0 1 1 1 0 0 1 1 1 0 0
0 0 1 1 1 0 0 1 1 1 0 0
0 0 0 0 0 0 0 0 0 0 0 0

FIG.  16

_ AAABB BAAABBB AAABBB

FIG.  17

SPC6 _ SPC92 AAA SPC2 BBB SPC64 AAA SPC2 BBB SPC64 AAA SPC2 BBB

FIG.  18

77    76    82

A A A          B B B
A A A          B B B
A A A          B B B

78

81

**FIG. 19**

79

O O O O O O I─O─O─O─O O
O O I I I O O I I I O O
O O I I I O O I I I O O
O O I I I O O I I I O O
O O O O O O O─O─O─O I O

80

**FIG. 20**

77'                              78'

F AAABBBAAABBBAAABBBCUR J

**FIG. 21**

SPC6 F SPC92 AAA SPC2 BBB SPC64 AAA SPC2 BBB SPC64 AAA SPC2 BBB SPCI08 CUR

**FIG. 22**

FIG. 23

FIG. 24

FIG. 25

AAABBB AAABBBAAABBB

A PARTIR DE    VERS

FIG. 26

SPC6 ☞ SPC92 AAA SPC2 BBB SPC64 AAA SPC2 BBB SPC64 AAA SPC2 BBB SPC108 ⅃ SPC108 SPC321 _ SPC108

A PARTIR DE    VERS

77  76

A  A  A     B  B  B

A  A  A     B  B  B

A  A  A     B  B

78

84

83

B

184

**FIG. 27**

79  80

0 0 0 0 0 1 0 0 0 0 0 0 0 0 0 0 0 0 0
0 0 1 1 1 0 0 1 1 1 0 0 0 0 0 0 0 0 0
0 0 1 1 1 0 0 1 1 1 0 0 0 0 0 0 0
0 0 1 1 1 0 0 1 1 0 0 0 0 0 0 0
0 0 0 0 0 0 0 0 0 0 1 0 0 0 0 0
0 0 0 0 0 0 0 0 0 0 1 0 0 0 0 0
0 0 0 0 0 0 0 0 0 0 0 0 0 0 0
0 0 0 0 0 0 0 0 0 0 0
0 0 0 0 0 1 0
0 0 0 0 0 1

85

86

185

**FIG. 28**

77'  78' 84' 83' 184'

AAABBBAAABBBAAABB  B

**FIG. 29**

77'  78' 84' 83' 184'

SPC6  SPC92 AAA SPC2 BBB SPC64 AAA SPC2 BBB SPC64 AAA SPC2 BB SPC109  SPC108  SPC321 B SPC108

**FIG. 30**

FIG. 31

FIG. 32

FIG. 33

VERS BUS 44.45

0 020 932

FIG. 34

VERS BUS
44,45

FIG. 35

FIG. 36

0 020 932